(19) Europäisches Patentamt
European Patent Office
Office européen des brevets

(11) EP 4 001 326 A1

(12) EUROPEAN PATENT APPLICATION
published in accordance with Art. 153(4) EPC

(43) Date of publication:
**25.05.2022 Bulletin 2022/21**

(21) Application number: **20843641.0**

(22) Date of filing: **05.06.2020**

(51) International Patent Classification (IPC):
***C08F 220/12*** *(2006.01)* ***C08F 220/26*** *(2006.01)*
***C08K 5/13*** *(2006.01)* ***C08L 33/04*** *(2006.01)*
***C08L 33/14*** *(2006.01)*

(52) Cooperative Patent Classification (CPC):
**C08F 220/12; C08F 220/26; C08K 5/13; C08L 33/04; C08L 33/14**

(86) International application number:
**PCT/JP2020/022317**

(87) International publication number:
**WO 2021/014794 (28.01.2021 Gazette 2021/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.07.2019 JP 2019134165**

(71) Applicant: **Zeon Corporation**
**Tokyo 100-8246 (JP)**

(72) Inventors:
- **MASUDA, Hirofumi**
  **Tokyo 100-8246 (JP)**
- **KAWANAKA, Takafumi**
  **Tokyo 100-8246 (JP)**

(74) Representative: **Fujimoto, Naho**
**Maiwald Patentanwalts- und Rechtsanwaltsgesellschaft mbH**
**Elisenhof**
**Elisenstraße 3**
**80335 München (DE)**

# (54) ACRYLIC RUBBER WITH EXCELLENT STORAGE STABILITY

(57) An acrylic rubber, including: 50 to 99.9% by weight of a bond unit derived from at least one (meth) acrylic acid ester selected from the group consisting of (meth) acrylic acid alkyl ester and (meth) acrylic acid alkoxyalkyl ester; 0.1 to 20% by weight of a bond unit derived from a monomer containing a reactive group; and 0 to 30% by weight of a bond unit derived from other monomer, wherein the acrylic rubber contains a phenolic anti-aging agent represented by a general formula (1),

[Chemical 7]

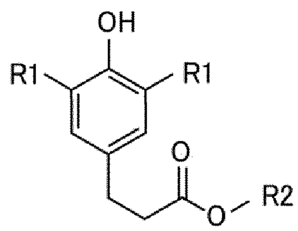

(R1 represents an isopropyl group or a t-butyl group, and R2 represents an alkyl group having 1 to 12 carbon atoms.), and the weight average molecular weight (Mw) of the acrylic rubber is in the range of 100,000 to 5,000,000.

EP 4 001 326 A1

## Description

[FIELD OF THE INVENTION]

The present invention relates to an acrylic rubber, a method for producing the same, a rubber composition and a rubber cross-linked product, and more particularly to an acrylic rubber excellent in storage stability, a method for producing the same, a rubber composition including the acrylic rubber, and a rubber cross-linked product obtained by cross-linking the same.

Acrylic rubber is a polymer mainly composed of acrylic acid ester and is generally known as rubber excellent in heat resistance, oil resistance, and ozone resistance, and is widely used in fields related to automobiles, added with an anti-aging agent as necessary.

For example, Patent Document 1 (International Publication WO2018/139466 Pamphlet) discloses a method for producing a crumb-shaped acrylic rubber capable of suppressing contamination of a polymerization device at the time of polymerization and excellent in initial mechanical strength by: stirring a monomer component containing ethyl acrylate, n-butyl acrylate, monobutyl fumarate, and the like, with pure water, sodium lauryl sulfate and polyoxyethylene dodecyl ether, to obtain a monomer emulsion; continuously dropping ferrous sulfate, sodium ascorbate and potassium persulfate aqueous solution dropwise over 3 hours; adding a 50% by weight of aqueous dispersion of 3-(3,5-tert-butyl-4-hydroxyphenyl) stearyl propionate (prepared by adding and mixing 50 parts of (3,5-di-tert-butyl-4-hydroxyphenyl) stearyl propionate to 50 parts of 0.2% by weight sodium lauryl sulfate aqueous solution) or 50% by weight aqueous dispersion of 2,4-bis [(octylthio) methyl]-6-methylphenol (prepared by adding and mixing 50 parts by weight of 2,4-bis [(octylthio) methyl]-6-methylphenol to 50 parts by weight of an aqueous solution of 0.2% by weight of sodium lauryl sulfate) to an emulsion polymerization liquid having a polymerization conversion rate of 95%; thereafter raising the temperature to 85°C; coagulating with sodium sulfate to generate hydrous crumbs; then washing the generated hydrous crumb with industrial water 4 times, once with acidic water of pH3, and once with pure water; and then drying at 160°C for 10 minutes with a hot air dryer. Further, it is described that according to this method, the hydrous crumbs washed with a screw-type extruder can be dried at 150°C or higher. However, in addition to heat resistance, it is required to improve storage stability under severe environments.

[CITATION LIST]

[PATENT LITERATURE]

[Patent Document 1] International Publication WO2018/139466 Pamphlet

[SUMMARY OF THE INVENTION]

[TECHNICAL PROBLEM]

The present invention has been made in consideration of such actual situation, and the present invention is aimed to provide an acrylic rubber excellent in storage stability, a method for producing the same, a rubber composition containing an acrylic rubber, and a rubber cross-linked product obtained by cross-linking the composition.

As a result of intensive studies in view of the above problems, the present inventors have found that an acrylic rubber containing an anti-aging agent with a specific structure having a specific composition unit, and a specific molecular weight has remarkably excellent storage stability, and that storage stability can be further improved by specifying the compound and content of the specific structural anti-aging agent, molecular weight distribution in the high molecular weight region, pH, water content, complex viscosity at a specific temperature, ash content, ash component content and component ratio.

The present inventors have also found that storage stability can be further improved by making the shape of the acrylic rubber of the present invention into a sheet shape or a bale shape and that storage stability is improved and processability is also excellent by specifying the specific gravity and the amount of gel.

Further, the inventors of the present invention have found out that acrylic rubber having excellent storage stability can be produced by adding an anti-aging agent having a specific structure to an emulsion polymerization solution after emulsion polymerization of a specific monomer component and coagulating and drying it, and that storage stability and water resistance of acrylic rubber produced by a specific coagulation method, hot water washing after coagulation, and dehydration of the hydrous crumb after washing can be further enhanced.

The present inventors have completed the present invention based on these findings.

Thus, according to the present invention, there is provided an acrylic rubber, comprising: 50 to 99.9% by weight of a bond unit derived from at least one (meth) acrylic acid ester selected from the group consisting of (meth) acrylic

acid alkyl ester and (meth) acrylic acid alkoxyalkyl ester; 0.1 to 20% by weight of a bond unit derived from a monomer containing a reactive group; and 0 to 30% by weight of a bond unit derived from other monomer, wherein the acrylic rubber contains a phenolic anti-aging agent represented by a general formula (1),

[Chemical 1]

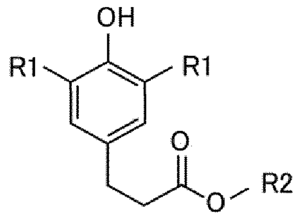

(R1 represents an isopropyl group or a t-butyl group, and R2 represents an alkyl group having 1 to 12 carbon atoms.), and the weight average molecular weight (Mw) of the acrylic rubber is in the range of 100,000 to 5,000,000.

In a desirable embodiment of the acrylic rubber of the present invention, the phenolic anti-aging agent represented by the general formula (1) is preferably 3-(4-hydroxy-3,5-di-tert-butylphenyl) octyl propionate or 3-(4-hydroxy-3,5-diisopropylphenyl) octyl propionate.

In a desirable embodiment of the acrylic rubber of the present invention, the content of the phenolic anti-aging agent represented by the general formula (1) is preferably 0.001 to 15% by weight.

In a desirable embodiment of the acrylic rubber of the present invention, a ratio (Mz / Mw) of Z-average molecular weight (Mz) and weight average molecular weight (Mw) is preferably 1.3 or more.

In a desirable embodiment of the acrylic rubber of the present invention, the complex viscosity ([η] 60°C) at 60°C is preferably 15,000 Pa·s or less.

In a desirable embodiment of the acrylic rubber of the present invention, a ratio ([η] 100°C / [η] 60°C) of the complex viscosity ([η] 100°C) at 100°C to the complex viscosity ([η] 60°C) at 60°C is preferably 0.5 or more.

The acrylic rubber of the present invention preferably has a pH of 6 or less.

In a desirable embodiment of the acrylic rubber of the present invention, a water content is preferably less than 1% by weight.

In a desirable embodiment of the acrylic rubber of the present invention, an ash content is preferably 0.5% by weight or less.

In a desirable embodiment of the acrylic rubber of the present invention, a total amount of magnesium and phosphorus in the ash is preferably 30% by weight or more.

In a desirable embodiment of the acrylic rubber of the present invention, a ratio ([Mg]/[P]) of magnesium to phosphorus in the ash is preferably in the range of 0.4 to 2.5.

In a desirable embodiment of the acrylic rubber of the present invention, it is preferable that the acrylic rubber has a sheet shape or a bale shape.

The acrylic rubber of the present invention preferably has a specific gravity of 0.8 or more.

In a desirable embodiment of the acrylic rubber of the present invention, a gel amount is preferably 50% by weight or less.

Thus, according to the present invention, there is provided a method for producing an acrylic rubber by: emulsifying a monomer component containing at least one (meth) acrylic acid ester selected from the group consisting of (meth) acrylic acid alkyl ester and (meth) acrylic acid alkoxyalkyl ester, a monomer containing a reactive group, and other copolymerizable monomers as required, with water and an emulsifier, to obtain an emulsion polymerization liquid emulsion-polymerized under the presence of a polymerization catalyst; adding a phenolic anti-aging agent represented by the above general formula (1),

[Chemical 2]

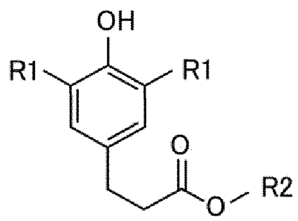

(R1 represents an isopropyl group or a t-butyl group, and R2 represents an alkyl group having 1 to 12 carbon atoms.) to the obtained emulsion polymerization liquid; and thereafter coagulating and drying.

In a desirable embodiment of the method for producing an acrylic rubber of the present invention, it is preferable that the coagulation of the emulsion polymerization liquid added with the phenolic anti-aging agent represented by the general formula (1) is performed by adding the emulsion polymerization liquid to the coagulant liquid being stirred.

In a desirable embodiment of the method for producing an acrylic rubber of the present invention, it is preferable that the hydrous crumb produced during coagulation is washed with hot water.

In a desirable embodiment of the method for producing an acrylic rubber of the present invention, it is preferable that water is squeezed out from the hydrous crumb after washing using a dehydrator.

Thus, according to the present invention, there is also provided a rubber composition containing a rubber component containing the acrylic rubber, a filler, and a cross-linking agent.

Thus, according to the present invention, there is further provided a rubber cross-linked product obtained by cross-linking the above rubber composition.

[EFFECT OF THE INVENTION]

According to the present invention, there are provided an acrylic rubber excellent in storage stability, a method for producing the same, a rubber composition containing the acrylic rubber, and a cross-linked product obtained by cross-linking the rubber composition.

[BRIEF DESCRIPTION OF THE DRAWINGS]

FIG. 1 is a diagram schematically showing an example of an acrylic rubber production system usable for producing an acrylic rubber of a sheet shape or a bale shape according to an embodiment of the present invention
FIG. 2 is a diagram showing a configuration of the screw-type extruder of FIG. 1.
FIG. 3 is a diagram showing a configuration of a carrier-type cooling device used as the cooling device of FIG. 1.

[DETAILED DESCRIPTION OF EMBODIMENTS]

The acrylic rubber constituting the acrylic rubber sheet of the present invention is preferably an acrylic rubber comprising: 50 to 99.9% by weight of a bond unit derived from at least one (meth) acrylic acid ester selected from the group consisting of (meth) acrylic acid alkyl ester and (meth) acrylic acid alkoxyalkyl ester; 0.1 to 20% by weight of the bond unit derived from a monomer containing a reactive group; and 0 to 30% by weight of a bond unit derived from other monomer, wherein the acrylic rubber contains a phenolic anti-aging agent represented by a general formula (1),

[Chemical 3]

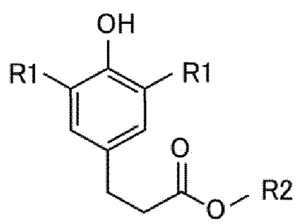

(R1 represents an isopropyl group or a t-butyl group, and R2 represents an alkyl group having 1 to 12 carbon atoms.), and the weight average molecular weight (Mw) of the acrylic rubber is in the range of 100,000 to 5,000,000.

<Monomer Component>

The acrylic rubber of the present invention comprises a bond unit derived from at least one (meth) acrylic acid ester selected from the group consisting of (meth) acrylic acid alkyl esters and (meth) acrylic acid alkoxyalkyl esters, a bond unit derived from a monomer containing a reactive group, and a bond unit derived from other copolymerizable monomer, as necessary. In the present invention, "(meth) acrylic acid ester" is used as a general term for esters of acrylic acid and / or methacrylic acid.

The (meth) acrylic acid alkyl ester is not particularly limited, but it is usually a (meth) acrylic acid alkyl ester

having an alkyl group having 1 to 12 carbon atoms, preferably a (meth) acrylic acid alkyl ester having an alkyl group having 1 to 8 carbon atoms, more preferably a (meth) acrylic acid alkyl ester having an alkyl group having 2 to 6 carbon atoms.

Specific examples of the alkyl (meth) acrylate include methyl (meth) acrylate, ethyl (meth) acrylate, n-propyl (meth) acrylate, isopropyl (meth) acrylate, and n-butyl (meth) acrylate, isobutyl (meth) acrylate, n-hexyl (meth) acrylate, 2-ethylhexyl (meth) acrylate, cyclohexyl (meth) acrylate, and the like, preferably ethyl (meth) acrylate, n-butyl (meth) acrylate, and more preferably ethyl acrylate and n-butyl acrylate.

The (meth) acrylic acid alkoxyalkyl ester is not particularly limited, but it is usually a (meth) acrylic acid alkoxyalkyl ester having an alkoxyalkyl group having 2 to 12 carbon atoms, preferably a (meth) acrylic acid alkoxyalkyl ester having an alkoxyalkyl group having 2 to 8 carbon atoms, more preferably a (meth) acrylic acid alkoxyalkyl ester having an alkoxyalkyl group having 2 to 6 carbon atoms.

Specific examples of the (meth) acrylic acid alkoxyalkyl ester include methoxymethyl (meth) acrylate, methoxyethyl (meth) acrylate, methoxypropyl (meth) acrylate, methoxy butyl (meth) acrylate, ethoxymethyl (meth) acrylate, ethoxyethyl (meth) acrylate, propoxyethyl (meth) acrylate, butoxyethyl (meth) acrylate, and the like. Among these, methoxyethyl (meth) acrylate, ethoxyethyl (meth) acrylate and the like are preferable, and methoxyethyl acrylate and ethoxyethyl acrylate are more preferable.

At least one type of (meth) acrylic acid ester selected from the group consisting of these (meth) acrylic acid alkyl esters and (meth) acrylic acid alkoxyalkyl esters may be used alone or in combination of two or more, the ratio of the (meth) acrylic acid ester in the acrylic rubber is usually in the range of 50 to 99.9% by weight, preferably 70 to 99.9% by weight, more preferably 80 to 99.5% by weight, and most preferably 87 to 99% by weight. If the amount of (meth) acrylic acid ester in the monomer component is excessively small, the weather resistance, heat resistance, and oil resistance of the resulting acrylic rubber may decrease, which is not preferable.

The monomer containing a reactive group is not particularly limited and may be appropriately selected depending on the purpose of use, but when it is preferably a monomer having at least one functional group selected from the group consisting of a carboxyl group, an epoxy group and a halogen group, more preferably a monomer having at least one functional group selected from the group consisting of a carboxyl group, an epoxy group and a chlorine atom, particularly preferably a monomer having a carboxyl group, an epoxy group, and the like, and most preferably a monomer having a carboxyl group, it is preferable, since cross-linking property of the acrylic rubber can be highly improved. Further, a monomer having an ion-reactive group such as a carboxyl group or an epoxy group is preferable, since water resistance of the acrylic rubber can be improved.

The monomer having a carboxyl group is not particularly limited, but ethylenically unsaturated carboxylic acid can be preferably used. Examples of the ethylenically unsaturated carboxylic acid include, for example, ethylenically unsaturated monocarboxylic acid, ethylenically unsaturated dicarboxylic acid, ethylenically unsaturated dicarboxylic acid monoester, and the like, and among these, ethylenically unsaturated dicarboxylic acid monoester is particularly preferable, since the said monoester can further improve the compression set resistance property when the acrylic rubber is a rubber cross-linked product.

The ethylenically unsaturated monocarboxylic acid is not particularly limited, but an ethylenically unsaturated monocarboxylic acid having 3 to 12 carbon atoms is preferable, and examples thereof include acrylic acid, methacrylic acid, $\alpha$-ethylacrylic acid, crotonic acid, and cinnamic acid.

The ethylenically unsaturated dicarboxylic acid is not particularly limited, but an ethylenically unsaturated dicarboxylic acid having 4 to 12 carbon atoms is preferable, and examples thereof include: butendioic acid such as fumaric acid and maleic acid; itaconic acid; citraconic acid; and the like. It should be noted that the ethylenically unsaturated dicarboxylic acid also includes those which exist as an anhydride.

The ethylenically unsaturated dicarboxylic acid monoester is not particularly limited, but is usually an ethylenically unsaturated dicarboxylic acid having 4 to 12 carbon atoms and an alkyl monoester having 1 to 12 carbon atoms, preferably an ethylenically unsaturated dicarboxylic acid having 4 to 6 carbon atoms and an alkyl monoester having 2 to 8 carbon atoms, and more preferably a butendionic acid having 4 carbon atoms and an alkyl monoester having 2 to 6 carbon atoms.

Specific examples of the ethylenic unsaturated dicarboxylic acid monoester include: butenedione acid monoalkyl ester such as monomethyl fumarate, monoethyl fumarate, mono-n-butyl fumarate, monomethyl maleate, monoethyl maleate, mono-n-butyl maleate, monocyclopentyl fumarate, monocyclohexyl fumarate, monocyclohexenyl fumarate, monocyclopentyl maleate, monocyclohexyl maleate; and itaconic acid monoalkyl ester such as monomethyl itaconate, monoethyl itaconate, mono-n-butyl itaconate, monocyclohexyl itaconate, and the like. Among these, mono-n-butyl fumarate and mono-n-butyl maleate are preferable, and mono-n-butyl fumarate is particularly preferable.

Examples of the epoxy group-containing monomer include: epoxy group-containing (meth) acrylic acid esters such as glycidyl (meth) acrylate; epoxy group-containing vinyl ethers such as allyl glycidyl ether and vinyl glycidyl ether; and the like.

Examples of the monomer having a halogen group include unsaturated alcohol esters of halogen-containing

saturated carboxylic acid, (meth) acrylic acid haloalkyl ester, (meth) acrylic acid haloacyloxyalkyl ester, (meth) acrylic acid (haloacetyl carbamoyloxy) alkyl ester, halogen-containing unsaturated ether, halogen-containing unsaturated ketone, halomethyl group-containing aromatic vinyl compound, halogen-containing unsaturated amide, and haloacetyl group-containing unsaturated monomer, and the like.

Examples of unsaturated alcohol esters of halogen-containing saturated carboxylic acids include vinyl chloroacetate, vinyl 2-chloropropionate, allyl chloroacetate and the like. Examples of the haloalkyl (meth) acrylate ester include chloromethyl (meth) acrylate, 1-chloroethyl (meth) acrylate, 2-chloroethyl (meth) acrylate, 1,2-dichloroethyl (meth) acrylate, 2-chloropropyl (meth) acrylate, 3-chloropropyl (meth) acrylate, 2,3-dichloropropyl (meth) acrylate, and the like. Examples of the haloacyloxyalkyl (meth) acrylate include 2-(chloroacetoxy) ethyl (meth) acrylate, 2-(chloroacetoxy) propyl (meth) acrylate, and 3-(chloroacetoxy) propyl (meth) acrylate, 3-(hydroxychloroacetoxy) propyl (meth) acrylate, and the like. Examples of the (meth) acrylic acid (haloacetylcarbamoyloxy) alkyl ester include 2-(chloroacetylcarbamoyloxy) ethyl (meth) acrylate and 3-(chloroacetylcarbamoyloxy) propyl (meth) acrylate. Examples of the halogen-containing unsaturated ether include chloromethyl vinyl ether, 2-chloroethyl vinyl ether, 3-chloropropyl vinyl ether, 2-chloroethyl allyl ether, 3-chloropropyl allyl ether and the like. Examples of halogen-containing unsaturated ketones include 2-chloroethyl vinyl ketone, 3-chloropropyl vinyl ketone, 2-chloroethyl allyl ketone, and the like. Examples of the halomethyl group-containing aromatic vinyl compound include p-chloromethylstyrene, m-chloromethylstyrene, o-chloromethylstyrene, p-chloromethyl-$\alpha$-methylstyrene, and the like. Examples of the halogen-containing unsaturated amide include n-chloromethyl (meth) acrylamide and the like. Examples of the haloacetyl group-containing unsaturated monomer include 3-(hydroxychloroacetoxy) propyl allyl ether, p-vinylbenzyl chloroacetic acid ester, and the like.

These reactive group-containing monomers are used alone or in combination of two or more, and the ratio in the acrylic rubber is usually 0.1 to 20% by weight, preferably 0.1 to 10% by weight, more preferably 0.5 to 5% by weight, most preferably 1 to 3% by weight.

Other monomers may be used as necessary is not particularly limited as long as it can be copolymerized with the above-mentioned monomers. Examples of the other monomers include, for example, olefin-based monomer such as aromatic vinyl, ethylenically unsaturated nitrile, acrylamide monomer, and the like. Examples of the aromatic vinyl include styrene, $\alpha$-methylstyrene, divinylbenzene and the like. Examples of the ethylenically unsaturated nitrile include acrylonitrile, methacrylonitrile, and the like. Examples of the acrylamide monomer include acrylamide, methacrylamide, and the like. Examples of the other olefinic monomers include ethylene, propylene, vinyl acetate, ethyl vinyl ether, butyl vinyl ether, and the like.

These other monomers may be used alone or in combination of two or more, and the ratio of the other monomers in the acrylic rubber is usually 0 to 30% by weight, preferably 0 to 20% by weight, more preferably 0 to 15% by weight, most preferably 0 to 10% by weight.

<Acrylic rubber>

The acrylic rubber of the present invention comprises the above-mentioned (meth) acrylic acid alkyl ester and at least one (meth) acrylic acid ester selected from the group consisting of (meth) acrylic acid alkoxyalkyl esters, a monomer containing a reactive group, and optionally other copolymerizable monomer, wherein a proportion in each acrylic rubber is such that the bond unit derived from at least one (meth) acrylic acid ester selected from the group consisting of (meth) acrylic acid alkyl ester and (meth) acrylic acid alkoxyalkyl ester is usually in the range of 50 to 99.9% by weight, preferably 70 to 99.9% by weight, more preferably 80 to 99.5% by weight, particularly preferably 87 to 99% by weight, and a bond derived from a monomer containing a reactive group, the unit is usually in the range of 0.1 to 20% by weight, preferably 0.1 to 10% by weight, more preferably 0.5 to 5% by weight, particularly preferably 1 to 3% by weight, and the bond unit derived from the monomer is usually in the range of 0 to 30% by weight, preferably 0 to 20% by weight, more preferably 0 to 15% by weight, particularly preferably 0 to 10% by weight. By setting these monomers of the acrylic rubber in this range, the object of the present invention can be highly achieved, and when the acrylic rubber is used as a cross-linked product, the water resistance and compression set resistance properties are remarkably improved, which is preferable.

When the weight average molecular weight (Mw) of the acrylic rubber of the present invention is, by an absolute molecular weight measured by GPC-MALS, in the range of 100,000 to 5,000,000, preferably 500,000 to 4,000,000, more preferably 700,000 to 3,000,000, most preferably 1,000,000 to 2,500,000, it is preferable, since the storage stability, the processability, the strength properties, and the compression set resistance properties at the time of mixing the acrylic rubber are highly well-balanced.

The ratio (Mz / Mw) of the Z-average molecular weight (Mz) and the weight-average molecular weight (Mw) of the acrylic rubber of the present invention is not particularly limited, when it is, by an absolute molecular weight distribution focusing on the high molecular weight region measured by GPC-MALS, usually in the range of 1.3 or more, preferably 1.4 to 5, and more preferably 1.5 to 2, it is preferable, since the processability and strength properties of the acrylic rubber are highly well-balanced, and changes in physical properties during storage can be mitigated.

The content of the reactive group of the acrylic rubber of the present invention may be appropriately selected according to the purpose of use, but when it is, in the weight ratio of the reactive group itself, usually in the range of 0.001 to 5% by weight, preferably 0.01 to 3% by weight, more preferably 0.05 to 1% by weight, particularly preferably 0.1 to 0.5% by weight, it is preferable, since the properties such as processability, strength properties, compression set resistance property, oil resistance, heat resistance, cold resistance and water resistance are highly well-balanced.

The glass transition temperature (Tg) of the acrylic rubber of the present invention is not particularly limited, but is usually 20°C or lower, preferably 10°C or lower, and more preferably 0°C or lower. The lower limit value of the glass transition temperature (Tg) of the acrylic rubber is not particularly limited, but it is usually -80°C or higher, preferably -60°C or higher, more preferably -40°C or higher. When the glass transition temperature (Tg) of the acrylic rubber is at least the above lower limit, the oil resistance and heat resistance can be more excellent, and when the glass transition temperature (Tg) is lower than the above upper limit, the cold resistance and processability can be more excellent.

The specific gravity of the acrylic rubber of the present invention is not particularly limited, but when it is usually in the range of 0.7 or more, preferably 0.8 to 1.4, more preferably 0.9 to 1.3, particularly preferably 0.95 to 1.25, most preferably 1.0 to 1.2, it is preferable, since storage stability is highly excellent.

The gel amount of the acrylic rubber of the present invention is not particularly limited, but when it is, by the amount insoluble in methyl ethyl ketone, usually 50% by weight or less, preferably 30% by weight or less, more preferably 20% by weight or less, particularly preferably 10% by weight or less, most preferably 5% by weight or less, it is preferable, since the storage stability and processability are highly improved.

The pH of the acrylic rubber of the present invention is not particularly limited, but when it is usually in the range of 6 or less, preferably 2 to 6, more preferably 2.5 to 5.5, particularly preferably 3 to 5, it is preferable, since storage stability is highly improved.

The water content of the acrylic rubber of the present invention is not particularly limited, but it is usually less than 1% by weight, preferably 0.8% by weight or less, more preferably 0.6% by weight or less, it is preferable, since the cross-linking property is optimized and the properties such as heat resistance and water resistance are highly excellent.

The ash content of the acrylic rubber of the present invention is not particularly limited, but when it is usually 0.5% by weight or less, preferably 0.3% by weight or less, more preferably 0.2% by weight or less, particularly preferably 0.15% by weight or less, it is preferable, since storage stability and water resistance are excellent.

The lower limit of the ash content of the acrylic rubber of the present invention is not particularly limited, but when is usually 0.0001% by weight or more, preferably 0.0005% by weight or more, more preferably 0.001% by weight or more, particularly preferably 0.005% by weight or more, most preferably 0.01% by weight or more, it is preferable, since stickiness to the metal surface is suppressed and workability is excellent.

The ash content of the acrylic rubber of the present invention in which storage stability, water resistance and workability are highly well-balanced, is usually in the range of 0.0001 to 0.5% by weight, preferably 0.0005 to 0.3% by weight, more preferably 0.001 to 0.2% by weight, particularly preferably 0.005 to 0.15% by weight, most preferably 0.01 to 0.12% by weight.

The content (total amount) of at least one element selected from the group consisting of sodium, sulfur, calcium, magnesium, and phosphorus in the ash of the acrylic rubber of the present invention is not particularly limited, but when it is, as a percentage of the total ash content, usually at least 30% by weight, preferably 50% by weight or more, more preferably 70% by weight or more, particularly preferably 80% by weight or more, it is preferable, since storage stability and water resistance are highly excellent.

The total amount of sodium and sulfur in the ash of the acrylic rubber of the present invention is not particularly limited, but when it is, with respect to the total ash content, usually 30% by weight or more, preferably 50% by weight or more, more preferably 70% by weight or more, particularly preferably 80% by weight or more, it is preferable, since the storage stability and water resistance are highly excellent.

The ratio of sodium to sulfur in the ash of the acrylic rubber of the present invention ([Na]/[S]) is, by weight ratio, not particularly limited, but when it is usually in the range of 0.4 to 2.5, preferably 0.6 to 2, preferably 0.8 to 1.7, more preferably 1 to 1.5, it is preferable, since the water resistance is highly excellent.

The total amount of magnesium and phosphorus in the ash of the acrylic rubber of the present invention is not particularly limited, but when it is, with respect to the total ash content, usually 30% by weight or more, preferably 50% by weight or more, and more preferably 70% by weight or more, and particularly preferably 80% by weight or more, it is preferable, since the storage stability and the water resistance are highly excellent.

The ratio of magnesium to phosphorus ([Mg]/[P]) in the ash of the acrylic rubber of the present invention is, in a weight ratio, not particularly limited, but when it is usually in the range of 0.4 to 2.5, preferably 0.4 to 1.3, more preferably 0.4 to 1, particularly preferably 0.45 to 0.75, most preferably 0.5 to 0.7, it is preferable, since the storage stability and the water resistance are highly excellent.

The complex viscosity ([η] 60°C) of the acrylic rubber of the present invention at 60°C is not particularly limited, but when it is usually in the range of 15,000 Pa·s or less, preferably 2,000 to 10,000 Pa·s, more preferably 2,500 to 7,000 Pa·s, most preferably 2,700 to 5,500 Pa·s, it is preferable, since processability, oil resistance and shape retention

are excellent.

The complex viscosity ([η] 100°C) of the acrylic rubber of the present invention at 100°C is not particularly limited, but when it is usually in the range of 1,500 to 6,000 Pa·s, preferably 2,000 to 5,000 Pa·s, more preferably 2,500 to 4,000 Pa·s, most preferably 2,500 to 3,500 Pa·s, it is preferable, since processability, oil resistance, and shape retention are excellent.

The ratio ([η] 100°C / [η] 60°C) of the complex viscosity ([η] 100°C) at 100°C to the complex viscosity ([η] 60°C) at 60°C of the acrylic rubber of the present invention is not particularly limited, but it is usually 0.5 or more, preferably 0.6 or more, more preferably 0.7 or more, particularly preferably 0.8 or more, most preferably 0.82 or more. When the ratio ([η] 100°C / [η] 60°C) of the complex viscosity ([η] 100°C) at 100°C to the complex viscosity ([η] 60°C) at 60°C of the acrylic rubber of the present invention is usually in the range of 0.5 to 0.99, preferably 0.6 to 0.98, more preferably 0.75 to 0.95, particularly preferably 0.8 to 0.94, most preferably 0.83 to 0.93, it is preferable, since processability, oil resistance, and shape retention are highly well-balanced.

The Mooney viscosity (ML1+4,100°C) of the acrylic rubber of the present invention is not particularly limited, but when it is usually 10 to 150, preferably 20 to 100, more preferably 25 to 70, it is preferable, since the processability and strength properties are highly well-balanced.

<Contained Anti-aging Agent>

The acrylic rubber of the present invention is characterized in that it contains a phenolic anti-aging agent having the general formula (1)

[Chemical 4]

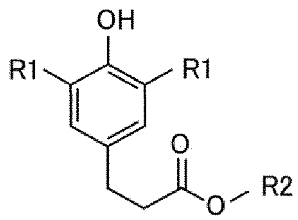

(R1 represents an isopropyl group or a t-butyl group, and R2 represents an alkyl group having 1 to 12 carbon atoms).

R1 in the formula represents an isopropyl group or a t-butyl group, preferably a t-butyl group. R2 in the formula represents an alkyl group having 1 to 12 carbon atoms, preferably an alkyl group having 4 to 10 carbon atoms, more preferably an alkyl group having 6 to 10 carbon atoms.

Specific examples of the phenol anti-aging agent represented by the general formula (1) include 3-(4-hydroxy-3,5-di-tert-butylphenyl) butyl propionate, 3-(4-hydroxy-3,5-di-tert-butylphenyl) hexyl propionate, 3-(4-hydroxy-3,5-di-tert-butylphenyl) octyl propionate, 3-(4-hydroxy-3,5-di-tert-butylphenyl) decyl propionate, 3-(4-hydroxy-3,5-diisopropylphenyl) heptyl propionate, 3-(4-hydroxy-3,5-diisopropylphenyl) octyl propionate, 3-(4-hydroxy-3,5-diisopropylphenyl) dodecyl propionate, and the like, preferably 3-(4-hydroxy-3,5-di-tert-butylphenyl) octyl propionate or 3-(4-hydroxy-3,5-diisopropylphenyl) octyl propionate, more preferably 3-(4-hydroxy-3,5-di-tert-butylphenyl) octyl propionate.

The melting point of the phenolic anti-aging agent represented by the general formula (1) is not particularly limited, but it is usually 100°C or lower, preferably 70°C or lower, more preferably 50°C or lower, particularly preferably 40°C or lower, most preferably 30°C or lower. When the melting point of the phenolic antiaging agent represented by the general formula (1) is in this range, it is preferable, since the storage stability and heat resistance of the acrylic rubber can be highly improved.

The lower limit of the melting point of the phenolic anti-aging agent represented by the general formula (1) is not particularly limited, but when it is usually -40°C or higher, preferably -20°C or higher, more preferably 0°C or higher, it is preferable, since the storage stability and heat resistance of the acrylic rubber can be highly improved.

These phenolic anti-aging agents represented by the general formula (1) can be used alone or in combination of two or more, and the content of the phenolic anti-aging agent in the acrylic rubber is not particularly limited, and it may be appropriately selected within the range in which the effect of the present invention can be expressed, but when it is usually in the range of 0.001 to 15% by weight, preferably 0.01 to 10% by weight, more preferably 0.1 to 5% by weight, and particularly preferably 0.5 to 3% by weight.

The acrylic rubber of the present invention need to include the phenolic anti-aging agent represented by the above general formula (1), but other anti-aging agents may be included within the range not impairing the object of the present invention.

[Production Method]

The method for producing the acrylic rubber of the present invention is not particularly limited, but the acrylic rubber can be easily produced, for example, by: emulsifying a monomer component containing at least one (meth) acrylic acid ester selected from the group consisting of (meth) acrylic acid alkyl ester and (meth) acrylic acid alkoxyalkyl ester, a monomer containing a reactive group, and other copolymerizable monomers as required, with water and an emulsifier, to obtain an emulsion polymerization liquid emulsion-polymerized under the presence of a polymerization catalyst; adding a phenolic anti-aging agent represented by the above general formula (1) to the obtained emulsion polymerization liquid; and thereafter coagulating and drying.
The monomer components used are the same as those described for the above monomer components, and the amount used may be appropriately selected so as to have the acrylic rubber monomer composition constituting the above acrylic rubber, and is the same as the monomer composition of the above acrylic rubber.

(Emulsifier)

The emulsifier used is not particularly limited, and examples thereof include an anionic emulsifier, a cationic emulsifier, a nonionic emulsifier, and the like, preferably those containing an anionic emulsifier, and particularly preferably those containing a sulfate ester salt, a phosphate ester salt, most preferably those containing a phosphate ester salt.
The anionic emulsifier is not particularly limited, and the example thereof include: for example, salts of fatty acids such as myristic acid, palmitic acid, oleic acid, linolenic acid; alkylbenzene sulfonates such as sodium dodecylbenzene sulfonate; sulfate ester salts such as sodium lauryl sulfate, ammonium lauryl sulfate, sodium myristyl sulfate, sodium laureth sulfate, sodium polyoxyethylene alkyl sulfate, sodium polyoxyethylene alkylaryl sulfate; phosphate ester salts such as sodium lauryl phosphate, potassium lauryl phosphate, sodium polyoxyalkylene alkyl ether phosphate; alkyl sulfosuccinate, and the like. Among these anionic emulsifiers, phosphate ester salts and sulfate ester salts are preferable, and phosphate ester salts are particularly preferable. These anionic emulsifiers can be used alone or in combination of two or more.
Examples of the cationic emulsifier include alkyl trimethylammonium chloride, dialkylammonium chloride, benzyl ammonium chloride and the like.
The nonionic emulsifier is not particularly limited, but examples thereof include: polyoxyalkylene fatty acid esters such as polyoxyethylene stearic acid esters; polyoxyalkylene alkyl ethers such as polyoxyethylene dodecyl ether; polyoxyalkylene alkylphenol ethers such as polyoxyethylene nonylphenyl ether; polyoxyethylene sorbitan alkyl ester. Among these, polyoxyalkylene alkyl ether and polyoxyalkylene alkylphenol ether are preferable, and polyoxyethylene alkyl ether and polyoxyethylene alkylphenol ether are more preferable.
These emulsifiers can be used alone or in combination of two or more, and the amount of the emulsifiers used is usually in the range of 0.01 to 10 parts by weight, preferably 0.1 to 5 parts by weight, more preferably 1 to3 parts by weight, with respect to the monomer component 100 parts by weight.
The method for mixing the monomer component, water and the emulsifier may be according to a conventional method, and examples thereof include a method of stirring the monomer, the emulsifier and water using a stirrer such as a homogenizer or a disk turbine, and the like. The amount of water used relative to 100 parts by weight of the monomer component is usually in the range of 10 to 750 parts by weight, preferably 50 to 500 parts by weight, more preferably 100 to 400 parts by weight.

(Polymerization Catalyst)

The polymerization catalyst used is not particularly limited as long as it is usually used in emulsion polymerization, but, for example, a redox catalyst composed of a radical generator and a reducing agent can be used.
Examples of the radical generator include peroxides and azo compounds, and peroxides are preferable. An inorganic peroxide or an organic peroxide is used as the peroxide.
Examples of the inorganic peroxides include sodium persulfate, potassium persulfate, hydrogen peroxide, ammonium persulfate and the like. Among these, potassium persulfate, hydrogen peroxide and ammonium persulfate are preferable, and potassium persulfate is particularly preferable.
The organic peroxide is not particularly limited as long as it is a known one used in emulsion polymerization. Examples of the organic peroxide include, for example, 2,2-di(4,4-di-(t-butylperoxy) cyclohexyl) propane, 1-di-(t-hexylperoxy) cyclohexane, 1,1-di-(t-butylperoxy) cyclohexane, 4,4-di-(t-butylperoxy) n-butylvalerate, 2,2-di-(t-butylperoxy) butane, t-butyl hydroperoxide, cumene hydroperoxide, diisopropylbenzene hydroperoxide, paramenthane hydroperoxide, benzoyl peroxide, 1,1,3,3-tetraethyl butyl hydroperoxide, t-butyl cumyl peroxide, di-t-butyl peroxide, di-t-hexyl peroxide, di(2-t-butyl-peroxy-isopropyl) benzene, dicumyl peroxide, diisobutyryl peroxide, di(3,5,5-trimethylhexanoyl) peroxide, dilauroyl peroxide, disuccinic acid peroxide, dibenzoyl peroxide, di(3-methylbenzoyl) peroxide, benzoyl (3-methylbenzoyl) peroxide, diisobutyryl peroxydicarbonate, di-n-propyl peroxydicarbonate, di(2-ethylhexyl) peroxydicarbonate, di-sec-butylperoxydicarbonate, 1,1,3,3-tetramethylbutylperoxyneodecanate, t-hexylperoxypivalate, t-butylperoxyneodecanate, t-hexylperoxypivalate, t-butylperoxypivalate, 2,5-dimethyl-2,5-di(2-ethylhexanoylperoxy) hexane, 1,1,3,3-tetramethylbutylperoxy-2-ethylhexanate, t-hexylperoxy-2-ethylhexanate, t-butylperoxy-3,5,5-trimethylhexanate, t-hexylperoxyisopropyl monocarbonate, t-butylperoxyisopropyl monocarbonate, t-butylperoxy-2-ethylhexyl monocarbonate, 2,5-dimethyl-2,5-di(benzoylperoxy) hexane, t-butylperoxyacetate, t-hexylperoxybenzoate, t-butyl peroxybenzoate, 2,5-dimethyl-2,5-di(t-butylperoxy) hexane. Among these, diisopropylbenzene hydroperoxide, cumene hydroperoxide, paramenthane hydroperoxide, benzoyl peroxide and the like are preferable.

Examples of the azo compound include, for example, azobisisoptyronitrile, 4,4'-azobis (4-cyanovaleric acid), 2,2'-azobis [2-(2-imidazolin-2-yl) propane, 2,2'-azobis (propane-2-carboamidine), 2,2'-azobis [N-(2-carboxyethyl)-2-methylpropanamide], 2,2'-azobis {2-[1-(2-hydroxyethyl)-2-imidazoline-2-yl] propane}, 2,2'-azobis (1-imino-1-pyrrolidino-2-methylpropane) and 2,2'-azobis {2-methyl-N-[1,1-bis (hydroxymethyl)-2-hydroxyethyl] propanamide}, and the like.

These radical generators may be used alone or in combination of two or more, and the amount thereof with respect to 100 parts by weight of the monomer component is usually in the range of 0.0001 to 5 parts by weight, preferably 0.0005 to 1 part by weight, more preferably 0.001 to 0.5 part by weight.

The reducing agent can be used without particular limitation as long as it is used in a redox catalyst for emulsion polymerization, but in the present invention, it is particularly preferable to use at least two reducing agents. As the at least two reducing agents, for example, a combination of a metal ion compound in a reduced state and another reducing agent is preferable.

The metal ion compound in the reduced state is not particularly limited, and examples thereof include ferrous sulfate, sodium hexamethylenediamine iron tetraacetate, cuprous naphthenate, and the like, and among these, ferrous sulfate is preferable. These metal ion compounds in a reduced state can be used alone or in combination of two or more, and the amount of the metal ion compounds used with respect to 100 parts by weight of the monomer component is usually in the range of 0.000001 to 0.01 parts by weight, preferably 0.00001 to 0.001 parts by weight, more preferably 0.00005 to 0.0005 parts by weight.

The reducing agent other than the metal ion compound in the reduced state is not particularly limited, but examples thereof include: ascorbic acids such as ascorbic acid, sodium ascorbate, potassium ascorbate or a salt thereof; erythorbic acids such as erythorbic acid, sodium erythorbate, potassium erythorbate or a salt thereof; sulfinic acid salts such as sodium hydroxymethanesulfinate; sulfites such as sodium sulfite, potassium sulfite, sodium bisulfite, aldehyde sodium bisulfite, potassium bisulfite; pyrosulfites such as sodium pyrosulfite, potassium pyrosulfite, sodium hydrogensulfite, potassium hydrogensulfite and the like; thiosulfates such as sodium thiosulfate and potassium thiosulfate; phosphorous acid such as phosphorous acid, sodium phosphite, potassium phosphite, sodium hydrogen phosphite and potassium hydrogen phosphite, or salts thereof; pyrophosphite such as pyrophosphite, sodium pyrophosphite, potassium pyrophosphite, sodium hydrogen pyrophosphite, potassium hydrogen pyrophosphite, or a salt thereof; sodium formaldehyde sulfoxylate, and the like. Among these, ascorbic acid, or a salt thereof, sodium formaldehyde sulfoxylate and the like are preferable, and ascorbic acid or a salt thereof is particularly preferable.

These reducing agents other than the metal ion compound in the reduced state can be also used alone or in combination of two or more, and the amount used with respect to 100 parts by weight of the monomer component is usually in the range of 0.001 to 1 part by weight, preferably 0.005 to 0.5 part by weight, more preferably 0.01 to 0.3 part by weight.

A preferable combination of the metal ion compound in the reduced state and the other reducing agent is the combination of ferrous sulfate and ascorbic acid or a salt thereof and / or sodium formaldehyde sulfoxylate, more preferably a combination of ferrous sulfate with ascorbate and / or sodium formaldehyde sulfoxylate, most preferably a combination of ferrous sulfate and ascorbate. The amount of ferrous sulfate used with respect to 100 parts by weight of the monomer component at this time is usually in the range of 0.000001 to 0.01 parts by weight, preferably 0.00001 to 0.001 parts by weight, more preferably 0.00005 to 0.0005 parts by weight, and the amount of ascorbic acid or a salt thereof and / or sodium formaldehyde sulfoxylate used with respect to 100 parts by weight of the monomer component is usually in the range of 0.001 to 1 part by weight, preferably 0.005 to 0.5 part by weight, more preferably 0.01 to 0.3 part by weight.

The amount of water to be used with respect to 100 parts by weight of the monomer component in the emulsion polymerization reaction may be only that used for preparing the emulsion of the above-mentioned monomer component, but it is usually in the range of 10 to 1,000 parts by weight, preferably 50 to 500 parts by weight, more preferably 80 to 400 parts by weight, most preferably 100 to 300 parts by weight.

The emulsion polymerization reaction may be a conventional method, and may be a batch method, a semi-batch method, or a continuous method. The polymerization temperature and the polymerization time are not particularly limited and can be appropriately selected depending on the type of the polymerization initiator used and the like. The polymerization temperature is usually 0 to 100°C, preferably 5 to 80°C, more preferably 10 to 50°C, and the polymerization time is usually 0.5 to 100 hours, preferably 1 to 10 hours.

The polymerization conversion rate of the emulsion polymerization reaction is not particularly limited, but the acrylic rubber produced when the polymerization conversion rate is usually 80% by weight or more, preferably 90% by weight or more, more preferably 95% by weight or more, is preferable since the acrylic rubber is excellent in strength properties and free of monomer odor. A polymerization terminator may be used for termination of the polymerization.

(Anti-aging Agent Addition)

The phenolic anti-aging agent to be used represented in general formula (1) is the same as the above-described contained anti-aging agent, and the amount to be used may be appropriately selected so as to be the same as the content in the acrylic rubber, and it is, with respect to the monomer component 100 parts by weight, usually in the range of 0.001 to 15 parts by weight, preferably 0.01 to 10 parts by weight, more preferably 0.1 to 5 parts by weight, particularly preferably 0.3 to 3 parts by weight, most preferably 0.5 to 2 parts by weight.

The method for adding the phenolic anti-aging agent represented by the general formula (1) to the emulsion polymerization solution is not particularly limited and it may be a known method, but, it may either be adding the phenolic anti-aging agent represented by the general formula (1) as it is, or emulsifying with water and emulsifier and adding.

(Coagulation Process)

Coagulation of the emulsion polymerization liquid added with the phenolic anti-aging agent represented by the general formula (1) may be by a known method, for example, a method for generating hydrous crumbs by contacting the emulsion polymerization liquid and the coagulant liquid.

The coagulant to be used is not particularly limited, but a metal salt is usually used. Examples of the metal salt include, for example, metal salts such as alkali metal salt, periodic table group 2 metal salt, other metal salts, and the like, preferably alkali metal salt and periodic table group 2 metal salt, more preferably periodic table group 2 metal salt, particularly preferably magnesium salt.

Examples of the alkali metal salt include, for example: sodium salts such as sodium chloride, sodium nitrate, sodium sulphate, and the like; potassium salts such as potassium chloride, potassium nitrate, potassium sulfate, and the like; lithium salts such as lithium chloride, lithium nitrate, lithium sulfate, and the like. Among these, sodium salts are preferable, sodium chloride and sodium sulfate are particularly preferable.

Examples of the periodic table group 2 metal salt include, for example: magnesium chloride, calcium chloride, magnesium nitrate, calcium nitrate, magnesium sulfate, calcium sulfate, and the like, preferably calcium chloride, magnesium sulfate.

Examples of the other metal salt include, for example: zinc chloride, titanium chloride, manganese chloride, iron chloride, cobalt chloride, nickel chloride, aluminum chloride, tin chloride, zinc nitrate, titanium nitrate, manganese nitrate, iron nitrate, cobalt nitrate, nickel nitrate, aluminum nitrate, tin nitrate, zinc sulfate, titanium sulfate, manganese sulfate, iron sulfate, cobalt sulfate, nickel sulfate, aluminum sulfate, tin sulfate, and the like.

These coagulates can be used alone or in combination of two or more, and the amount thereof with respect to 100 parts by weight of the monomer component is usually in the range of 0.01 to 100 parts by weight, preferably 0.1 to 50 parts by weight, more preferably 1 to 30 parts by weight. When the coagulant is within this range, it is preferable, since the compression set resistance and the water resistance when the acrylic rubber is cross-linked can be highly improved while the acrylic rubber is sufficiently coagulated.

When the concentration of the coagulant in the coagulant liquid to be used is usually in the range of 0.1 to 20% by weight, preferably 0.5 to 15% by weight, more preferably 1 to 10% by weight, particularly preferably 1.5 to 5% by weight, it is preferable, since the particle size of the hydrous crumbs generated are uniform and can be focused in a specific region.

The temperature of the coagulant liquid is not particularly limited, but when it is usually within a range of 40°C or higher, preferably 40 to 90°C, and more preferably 50 to 80°C, it is preferable, since uniform hydrous crumbs are generated.

The method for contacting the emulsion polymerization liquid added with the phenolic anti-aging agent represented by the general formula (1) and the coagulant liquid is not particularly limited, for example, any one of a method of adding the coagulant liquid to the emulsion polymerization liquid, a method of adding the coagulant liquid to the emulsion polymerization liquid being stirred, a method of adding the emulsion polymerization liquid to the coagulant liquid, a method for adding the emulsion polymerization liquid to the coagulant liquid being stirred, and the like may be used, but the method of adding the emulsion polymerization liquid to the coagulant liquid being stirred is preferable, since the washing efficiency and the dehydration efficiency of the hydrous crumbs to be generated is excellent and the water resistance and the storage stability of the acrylic rubber to be obtained can be remarkably improved.

The stirring speed (rotation speed) of the coagulant liquid being stirred, which is the rotation speed of the stirring blade of the stirring device, is not particularly limited, but it is usually in the range of 100 rpm or higher, preferably 200

to 1,000 rpm, more preferably 300 to 900 rpm, and particularly preferably 400 to 800 rpm.

It is preferable that the rotation speed is maintained at such violently rotation speed, as the coagulant liquid is stirred violently to some extent that the particle size of the hydrous crumbs to be generated can be made small and uniform. Generation of crumbs having excessively large and small particles can be suppressed by setting the rotation speed to the above-mentioned lower limit or higher, and the coagulation reaction can be more easily controlled by controlling the amount to be equal to or less than the above-mentioned upper limit.

The peripheral speed of the coagulant liquid being stirred, which is the speed of the outer circumference of the stirring blade of the stirring device arranged, is not particularly limited, but it is preferable to stir vigorously to a certain extent, since the particle size of the hydrous crumbs to be generated can be made smaller and uniform. The peripheral speed of the hydrous crumbs is usually 0.5 m/s or greater, preferably 1 m/s or greater, more preferably 1.5 m/s or greater, particularly preferably 2 m/s or greater, and most preferably 2.5 m/s or greater. On the other hand, although the upper limit of the peripheral speed is not particularly limited, when the peripheral speed is usually 50 m/s or lower, preferably 30 m/s or lower, more preferably 25 m/s or lower, and most preferably 20 m/s or lower, it is preferable, since the coagulation reaction can be easily controlled.

By setting the above conditions of the coagulation reaction in the coagulation process (contact method, solid content concentration of emulsion polymerization liquid, concentration and temperature of the coagulant, rotation speed and peripheral speed during stirring of the coagulant liquid) within a specific range, the shape and crumb diameter of the hydrous crumbs to be generated are uniform and focused, and the removal of emulsifiers and coagulants during washing and dehydration efficiency are significantly improved, with the result that the water resistance and the storage stability of the acrylic rubber to be produced can be highly improved, which is preferable.

(Washing Process)

The washing method of the generated hydrous crumbs mentioned above is not particularly limited and may be a conventional method, but it is preferable to use a hot water, since the removal efficiency of the emulsifier and the coagulant from the hydrous crumbs is raised.

The amount of hot water to be used is not particularly limited, but when the amount of hot water with respect to 100 parts by weight of the above-mentioned monomer component per one washing is usually in the range of 50 parts by weight or more, preferably 50 to 15,000 parts by weight, more preferably 100 to 10,000 parts by weight, particularly preferably 150 to 5,000 parts by weight, it is preferable, since the ash content in the acrylic rubber can be effectively reduced during the washing.

The temperature of the hot water to be used in the washing process is not particularly limited, but when it is usually in the range of 40°C or higher, preferably 40 to 100°C, more preferably 50 to 90°C, most preferably 60 to 80°C, it is preferable, since the washing efficiency is remarkably raised.

By setting the water temperature at or above the above-mentioned lower limit, the emulsifier and the coagulant are separated from the hydrous crumbs, so that the washing efficiency improves.

The washing time is not particularly limited, but it is usually in the range of 1 to 120 minutes, preferably 2 to 60 minutes, more preferably 3 to 30 minutes.

The number of washings is not limited, but is usually 1 to 10 times, preferably a plurality of times, more preferably 2 to 3 times. From the viewpoint of reducing the residual amount of the coagulant in the finally obtained acrylic rubber, it is desirable that the number of times of washing is large, but as described above, the number of washings can be remarkably reduced by specifying the shape of the hydrous crumbs and the hydrous crumb diameter and or specifying the washing temperature within the above-mentioned range.

(Dehydration Process)

In the present invention, it is preferable to squeeze out water from the hydrous crumbs by a dehydrator, prior to drying the above-mentioned washed crumbs, since the ash content in the acrylic rubber can be remarkably reduced.

It is preferable that the hydrous crumbs to be charged in the dehydrator have been separated from free water by a strainer after washing. As the strainer, known ones can be used without particular limitation, and examples thereof include a wire mesh, a screen, an electric sifter, and the like, and the wire mesh and the screen are preferable. The water content of the hydrous crumbs after straining, which is the water content of the hydrous crumbs to be supplied to the dehydration/drying process is not particularly limited, but it is usually in the range of 50 to 80% by weight, preferably 50 to 70% by weight, more preferably 50 to 60% by weight.

The dehydrator may be any conventional one without particular limitation, and examples thereof include a centrifugal separator, a squeezer, and a screw-type extruder. In particular, the use of the screw-type extruder is preferable, since it can efficiently remove water from the hydrous crumbs and significantly lower the water content of the hydrous crumbs. Sticky acrylic rubber can usually be dehydrated only to a water content of about 45 to 55% by weight by a

centrifugal separator because the acrylic rubber adheres between the walls and slits in a centrifuge. Therefore, a mechanism that forcibly squeezes out the water like that of a screw-type extruder is preferable.
The slit width of the dehydrator is not particularly limited. When the slit width is usually in the range of 0.1 to 1 mm, preferably 0.2 to 0.6 mm, it is preferable, since the removal efficiency of the coagulant and the emulsifier from the hydrous crumb and the productivity are highly well-balanced.
The water content of the hydrous crumb after dehydration is not particularly limited, but it is usually 1 to 50% by weight, preferably 1 to 40% by weight, more preferably 5 to 40% by weight, particularly preferably 10 to 35% by weight, and most preferably 15 to 35% by weight. By setting the water content after dehydration to the above-mentioned lower limit or higher, the dehydration time can be shortened and the deterioration of the acrylic rubber can be suppressed, and by setting it to the above-mentioned upper limit or lower, the ash content can be sufficiently reduced.

(Drying Process)

A drying method is not particularly limited and may be a conventional method, and for example, it can be dried using a dryer such as a hot air dryer, a reduced pressure dryer, an expander dryer, a kneader-type drier or a screw-type extruder.
The drying temperature is not particularly limited, but when it is usually in the range of 100 to 250°C, preferably 110 to 200°C, more preferably 120 to 180°C, it is preferable, since it is possible to perform drying effectively without burning and deterioration of the acrylic rubber and reduce the amount of gel insoluble in methyl ethyl ketone in the acrylic rubber sheet.
The drying time is not particularly limited, and can be appropriately selected according to target water content and drying method.
The acrylic rubber thus obtained is remarkably excellent in the storage stability. The water content of the obtained acrylic rubber is usually less than 1% by weight, preferably 0.8% by weight or less, more preferably 0.6% by weight or less. Further, the shape of the acrylic rubber is not particularly limited, and it can be, for example, any one of crumb-shaped, powder-shaped, rod-shaped, or sheet shaped.

<Sheet-shaped Acrylic Rubber or Bale-shaped Acrylic Rubber>

The sheet-shaped acrylic rubber or the bale-shaped acrylic rubber of the present invention, which is one embodiment of the above-described acrylic rubber, is preferable, since it remarkably excels over the crumb-shaped acrylic rubber and the like in workability, and specific surface area of the acrylic rubber is small so that it is remarkably excellent in storage stability. The sheet-shaped acrylic rubber or the bale-shaped acrylic rubber of the present invention is in a raw rubber state and uncrosslinked.
The thickness of the sheet-shaped acrylic rubber of the present invention is not particularly limited and is appropriately selected according to the purpose of use, but when it is usually in the range of 1 to 40 mm, preferably 2 to 35 mm, more preferably 3 to 30 mm, most preferably 5 to 25 mm, it is preferable, since the workability, the storage stability and the productivity are highly well-balanced. The width of the sheet-shaped acrylic rubber of the present invention is not particularly limited and is appropriately selected according to the purpose of use, but when it is usually in the range of 300 to 1,200 mm, preferably 400 to 1,000 mm, more preferably 500 to 800 mm, it is preferable, since the ease of handling is particularly excellent. The length of the sheet-shaped acrylic rubber of the present invention is not particularly limited, but when it is usually in the range of 300 to 1,200 mm, preferably 400 to 1,000 mm, more preferably 500 to 800 mm, it is preferable, since the ease of handling is particularly excellent.
The shape of the bale-shaped acrylic rubber of the present invention is not particularly limited and is appropriately selected according to the purpose of use, but in many cases, rectangular is preferable. The size of the bale-shaped acrylic rubber of the present invention is not particularly limited and is appropriately selected according to the purpose of use, but it is appropriate that the width is usually in the range of 100 to 800 mm, preferably 200 to 500 mm, more preferably 250 to 450 mm, the length is usually in the range of 300 to 1,200 mm, preferably 400 to 1,000 mm, more preferably 500 to 800 mm, and the height (thickness) is usually in the range of 50 to 500 mm, preferably 100 to 300 mm, more preferably 150 to 250 mm.
The specific gravity of the sheet-shaped acrylic rubber or the bale-shaped acrylic rubber of the present invention is not particularly limited, but when it is usually 0.7 or more, preferably 0.8 or more, more preferably 0.9 or more, particularly 0.95 or more, most preferably 1 or more, it is preferable, since almost no air is contained therein, and the storage stability is excellent. Further, when the specific gravity of the sheet-shaped acrylic rubber or the bale-shaped acrylic rubber of the present invention is usually in the range of 0.7 to 1.6, preferably 0.8 to 1.5, more preferably 0.9 to 1.4, particularly preferably 0.95 to 1.3, most preferably 1.0 to 1.2, it is preferable, since the productivity, the storage stability, cross-linking property stability of the cross-linked product and the like are highly well-balanced.
The gel amount of the sheet-shaped or bale-shaped acrylic rubber of the present invention is not particularly

limited, but when the amount of gel insoluble in methyl ethyl ketone is usually 50% by weight or less, preferably 30% by weight or less, more preferably 20% by weight or less, particularly preferably 10% by weight or less, most preferably 5% by weight or less, it is preferable, since the storage stability and the processability are highly improved.

The sheet-shaped or bale-shaped acrylic rubber of the present invention is one form of the acrylic rubber, and the properties, including the properties other than above-described specific gravity and gel amount, such as monomer composition, amount of the reactive group, weight average molecular weight (Mw), ratio (Mz / Mw) of Z-average molecular weight (Mz) to weight average molecular weight (Mw), glass transition temperature (Tg), ash content, ash component content (total amount of sodium, magnesium, calcium, phosphorus and sulfur, total amount of magnesium and phosphorus, total amount of magnesium or phosphorus), ash component ratio, complex viscosity ([η] 60°C) at 60°C, complex viscosity ([η] 100°C) at 100°C, ratio ([η] 100°C / [η] 60°C) of complex viscosity ([η] 100°C) at 100°C to complex viscosity ([η] 60°C) at 60°C, water content, pH, Mooney viscosity (ML1+4,100°C), and the like are the same as those in the example and preferable range of the acrylic rubber.

The acrylic rubber component content of the sheet-shaped or bale-shaped acrylic rubber of the present invention is usually 85% by weight, preferably 90% by weight or more, more preferably 95% by weight or more, particularly preferably 97% by weight or more, most preferably 98% by weight or more. The acrylic rubber component content in the sheet-shaped or bale-shaped acrylic rubber of the present invention is the ash content remaining after the emulsifier and coagulant used in the production of acrylic rubber that could not be completely removed and the amount of anti-aging agent added and dispersed in the acrylic rubber are excluded.

The sheet-shaped or bale-shaped acrylic rubber of the present invention is excellent in operability and storage stability, and is also excellent in strength properties, processability and set compression resistance, and can be used as it is or by cutting.

<Method for producing sheet-shaped or bale-shaped acrylic rubber>

The method for producing the sheet-shaped or bale-shaped acrylic rubber is not particularly limited, but preferably, the sheet-shaped or bale-shaped acrylic rubber is produced by the method for producing the acrylic rubber described above followed by a molding process.

Specific examples of the method for producing sheet-shaped or bale-shaped acrylic rubber include, for example, a method for producing a sheet-shaped acrylic rubber comprising:

an emulsion polymerization process to emulsify a monomer component containing a (meth) acrylic acid ester, a monomer containing a reactive group, and other copolymerizable monomers as required, with water and an emulsifier, to obtain an emulsion polymerization liquid emulsion-polymerized under the presence of a polymerization catalyst;

an anti-aging agent addition process to add a phenolic anti-aging agent represented by the above general formula (1) to the obtained emulsion polymerization liquid;

a coagulation process in which hydrous crumbs are generated by contacting the emulsion polymerization solution added with the anti-aging agent with a coagulant liquid.

a washing process to wash the generated hydrous crumbs; and

a dehydration/drying/molding process, using a screw-type extruder provided with a dehydration barrel having a dehydration slit, a drying barrel under reduced pressure, and a die at a tip thereof, to dehydrate the washed hydrous crumbs up to water content of 1 to 40% by weight in the dehydration barrel, and thereafter dry up to water content of less than 1% by weight in the drying barrel, and to extrude a sheet-shaped dry rubber from the die.

The examples include a method for producing a bale-shaped acrylic rubber further including a baling process to laminate the extruded sheet-shaped dry rubber to be baled.

(Emulsion polymerization step, coagulation step and washing step)

The emulsion polymerization step, the coagulation step, and the washing step in the method for producing a sheet-shaped or bale-shaped acrylic rubber are the same as those described in the method for producing an acrylic rubber.

(Dehydration/Drying/Molding Process)

The dehydration/drying/molding process in the method for producing the sheet-shaped acrylic rubber or the bale-shaped acrylic rubber of the present invention is characterized by that the washed hydrous crumbs after the above washing are dehydrated to a water content of 1 to 40% by weight in a dehydration barrel, and the dehydrated hydrous crumbs are dried to obtain a dry rubber having a water content of less than 1% by weight in the drying barrel, and the

sheet-shaped dry rubber is extruded from a die, by using a screw-type extruder provided with the dehydration barrel having a dehydration slit, the drying barrel under reduced pressure, and the die at a top thereof.

In the present invention, as mentioned above, the hydrous crumbs to be supplied to the screw-type extruder is preferably separated from free water by a drainer after washing.

Draining Process

In the method for producing the sheet-shaped acrylic rubber or the bale-shaped acrylic rubber of the present invention, in order to improve the dehydration efficiency, it is preferable to provide a draining process to separate the free water from the hydrous crumbs after washing after the above-described washing process and prior to the dehydration/drying/molding process.

As the drainer, known ones can be used without particular limitation, and examples thereof include a wire mesh, a screen, an electric sifter, and the like, and among these, the wire mesh and the screen are preferable.

The opening of the strainer is not particularly limited, but when it is usually in the range of 0.01 to 5 mm, preferably 0.1 to 1 mm, more preferably 0.2 to 0.6 mm, it is preferable, since the loss of hydrous crumbs is small and the straining can be performed efficiently.

The water content of the hydrous crumbs after straining, which is the water content of the hydrous crumbs to be supplied to the dehydration/drying/ process is not particularly limited, but it is usually in the range of 50 to 80% by weight, preferably 50 to 70% by weight, more preferably 50 to 60% by weight.

The temperature of the hydrous crumbs after straining, which is the temperature of the hydrous crumbs to be supplied to the dehydration/drying process is not particularly limited, but when it is usually in the range of 40°C or higher, preferably 40 to 100°C, more preferably 50 to 90°C, particularly preferably 55 to 85°C, most preferably 60 to 80°C, it is preferable, since the hydrous crumbs, having a high specific heat of 1.5 to 2.5 KJ/kg·K and are hard to raise the temperature like the acrylic rubber of the present invention, can be efficiently dehydrated and dried by using the screw-type extruder.

Dehydration of Hydrous Crumbs (Dehydration Barrel Section)

Dehydration of hydrous crumbs is performed in a dehydration barrel having a dehydration slit. The opening of the dehydration slit may be appropriately selected according to conditions of use, but when the opening is usually in the range of 0.01 to 5 mm, preferably 0.1 to 1 mm, more preferably 0.2 to 0.6 mm, it is preferable, since loss of the hydrous crumbs is small, and dehydration of the hydrous crumbs can be efficiently performed.

The number of dehydration barrels in the screw-type extruder is not particularly limited, but when the number is usually plural, preferably 2 to 10, more preferably 3 to 6, it is preferable from the viewpoint of efficient dehydration of the sticky acrylic rubber.

There are two types of dehydration from the hydrous crumbs in the dehydration barrel: liquid removal from the dehydration slit (drainage) and steam removal (steam exhausting). In the present invention, the drainage is defined as dehydration, and the steam exhausting is defined as preliminary drying, so that they can be distinguished.

The water drained from the dehydration slit in the dehydration of the hydrous crumbs may be in either state of liquid (drainage) or steam (exhaust steam), but when using a screw-type extruder provided with a plurality of dehydration barrels, it is preferable to combine drainage and steam exhausting because it is possible to efficiently dehydrate the sticky acrylic rubber. The selection of the dehydration barrel to be a drainage type dehydration barrel or a steam exhausting type dehydration barrel of a screw-type extruder having three or more dehydration barrels may be appropriately made according to the purpose of use, but in order to reduce the ash content in the sheet-shaped acrylic rubber or the bale-shaped acrylic rubber that is usually produced, the number of drainage type barrels is increased, and in order to reduce the water content, the number of steam exhausting type barrels is increased.

The set temperature of the dehydration barrel is appropriately selected depending on the monomer composition of acrylic rubber, the ash content, the water content, the operating conditions, and the like, but it is usually in the range of 60 to 150°C, preferably 70 to 140°C, more preferably 80 to 130°C. The set temperature of the dehydration barrel for dehydration in the drainage state is usually in the range of 60 to 120°C, preferably 70 to 110°C, more preferably 80 to 100°C. The set temperature of the dehydration barrel for preliminary drying in the steam exhausting state is usually in the range of 100 to 150°C, preferably 105 to 140°C, more preferably 110 to 130°C.

The water content after the drainage-type dehydration to squeeze water from the hydrous crumbs is not particularly limited, but when it is 1 to 45% by weight, preferably 1 to 40% by weight, more preferably 5 to 35% by weight, particularly preferably 10 to 35% by weight, it is preferable, since the productivity and the ash removal efficiency are highly well-balanced.

When the dehydration is performed by a centrifuge or the like, dehydration of the sticky acrylic rubber having a reactive group can be hardly done because the acrylic rubber adheres to the dehydration slit portion (the water content is up to about 45 to 55% by weight). In the present invention, it is preferable to use a screw-type extruder having a

dehydrating slit and forcibly squeezes water by a screw, since the water content came to be reduced up to said content.

When the drainage-type dehydration barrel and the steam-exhausting-type dehydration barrel are provided, the dehydration of the hydrous crumbs after the drainage in the drainage-type dehydration barrel section is usually 5 to 40% by weight, preferably 10 to 40% by weight, more preferably 15 to 35% by weight, and the water content of the hydrous crumbs after the preliminary drying in the steam-exhausting-type dehydration barrel section is usually 1 to 30% by weight, preferably 3 to 20% by weight, more preferably 5 to 15% by weight.

By setting the water content after dehydration to the above lower limit or more, the dehydration time can be shortened and the deterioration of acrylic rubber can be suppressed, and by setting it to the above upper limit or less, the ash content can be sufficiently reduced.

Drying of the Hydrous Crumbs (Drying Barrel Section)

Drying of the hydrous crumbs after the above-described dehydration is characterized in that the hydrous crumbs are dried by the drying barrel section, which is equipped in the extruder, under reduced pressure.

The degree of pressure reduction of the drying barrel may be appropriately selected, but when it is usually 1 to 50 kPa, preferably 2 to 30 kPa, and more preferably 3 to 20 kPa, it is preferable, since the hydrous crumbs can be efficiently dried.

The set temperature of the drying barrel may be appropriately selected, but when the temperature is usually in the range of 100 to 250°C, preferably 110 to 200°C, more preferably 120 to 180°C, it is preferable, since there is no burning or deterioration of the acrylic rubber, so that the acrylic rubber is efficiently dried and the amount insoluble in methyl ethyl ketone in the sheet-shaped acrylic rubber or the bale-shaped acrylic rubber can be reduced.

The number of drying barrels in the screw-type extruder is not particularly limited, but is usually plural, preferably 2 to 10, and more preferably 3 to 8. The degree of pressure reduction in the case of having a plurality of drying barrels may be a degree of pressure reduction similar to that of all the drying barrels, or it may vary by the drying barrel. The set temperature in the case of having multiple drying barrels may be similar to that of all the drying barrels or it may vary by the drying barrel, but when the temperature of the discharge portion (closer to the die) is set higher than the temperature of the introduction portion (closer to the dehydration barrel), it is preferable, since the drying efficiency can be increased.

The water content of the dried rubber after drying is usually less than 1% by weight, preferably 0.8% by weight or less, and more preferably 0.6% by weight or less. In the present invention, it is particularly preferable that the dry rubber is melted and extruded while the water content of the dry rubber take this value (a state in which water is almost removed) in the screw-type extruder, since the amount of gel insoluble in methyl ethyl ketone of the sheet-shaped acrylic rubber or the bale-shaped acrylic rubber can be reduced.

In the present invention, the shear rate applied to the drying barrel of the screw-type extruder in a state where the acrylic rubber is substantially free of water is not particularly limited, but the sheet-shaped or bale-shaped acrylic rubber which is obtained when the shear rate is usually in the range of 10 [1/s] or more, preferably 10 to 400 [1/s], more preferably 50 to 250 [1/s], is preferable, since the storage stability, processability, strength properties, and compression set resistance property are highly well-balanced.

The shear viscosity of acrylic rubber in the screw-type extruder used in the present invention, particularly in a drying barrel, is not particularly limited, but the sheet-shaped acrylic rubber or the bale-shaped acrylic rubber which is obtained when the shear viscosity is usually in the range of 12,000 Pa·s or less, preferably 1,000 to 12,000 Pa·s. more preferably 2,000 to 10,000 Pa·s, particularly preferably 3,000 to 7,000 Pa·s, most preferably 4,000 to 6,000 Pa·s, is preferable, since the storage stability, processability and strength properties are highly balance.

Dry Rubber (Die Portion)

The dry rubber dehydrated/dried by the screw portions of the dehydration barrel and the drying barrel is sent to a screwless straightening die portion. A breaker plate or a wire net may or may not be provided between the screw portion and the die portion.

The extruded dry rubber is obtained by extruding from the die preferably having a substantially rectangular shape so that the dry rubber is extruded in a sheet shape, thereby the dry rubber having less entrapment of air and a large specific gravity of the extruded sheet and excellent in storage stability can be obtained.

The resin pressure in the die portion is not particularly limited, but when the resin pressure is usually in the range of 0.1 to 10 MPa, preferably 0.5 to 5 MPa, more preferably 1 to 3 MPa, it is preferable, since air entrapment of the sheet-shaped or bale-shaped acrylic rubber is small (specific gravity is large) and the productivity is excellent.

Screw-Type Extruder and Operating Conditions

The screw length (L) of the screw-type extruder to be used may be appropriately selected according to the

purpose of use, but it is usually in the range of 3,000 to 15,000 mm, preferably 4,000 to 10,000 mm, more preferably 4,500 to 8,000 mm.

The screw diameter (D) of the screw-type extruder to be used may be appropriately selected according to the purpose of use, but it is usually in the range of 50 to 250 mm, preferably 100 to 200 mm, more preferably 120 to 160 mm.

The ratio (L / D) of the screw length (L) to the screw diameter (D) of the screw-type extruder to be used is not particularly limited, but when it is usually in the range of 10 to 100, preferably 20 to 80, more preferably 30 to 60, it is preferable, since the water content can be less than 1% by weight without lowering the molecular weight of the dried rubber or causing burns.

The rotation speed (N) of the screw-type extruder to be used may be appropriately selected according to various conditions, but when it is usually in the range of 10 to 1,000 rpm, preferably 50 to 750 rpm, more preferably 100 to 500 rpm, most preferably 120 to 300 rpm, it is preferable, since the water content and the amount insoluble in methyl ethyl ketone of the sheet-shaped or bale-shaped acrylic rubber can be efficiently reduced.

The extrusion rate (Q) of the screw-type extruder to be used is not particularly limited, but it is usually in the range of 100 to 1,500 kg/hr, preferably 300 to 1,200 kg/hr, more preferably 400 to 1,000 kg/hr, most preferably 500 to 800 kg/hr.

The ratio (Q / N) of the extrusion rate (Q) and the number of revolutions (N) of the screw-type extruder used is not particularly limited, but it is usually in the range of 2 to 10, preferably 3 to 8, and more preferably 4 to 6.

Sheet-Shaped Dry Rubber

The shape of the dry rubber extruded from the screw-type extruder is sheet-shaped, which is preferable, because air is not entrapped when the dry rubber is extruded, so that the specific gravity is large, thereby highly improving storage stability. The sheet-shaped dry rubber extruded from the screw-type extruder is usually cooled and cut to be used as a sheet-shaped acrylic rubber.

The thickness of the sheet-shaped dry rubber extruded from the screw-type extruder is not particularly limited, but when it is usually in the range of 1 to 40 mm, preferably 2 to 35 mm, more preferably 3 to 30 mm, and most preferably 5 to 25 mm, it is preferable, since it has excellent workability and productivity. In particular, since the thermal conductivity of the sheet-shaped dry rubber is as low as 0.15 to 0.35 W/mK, in order to increase cooling efficiency and to improve the productivity remarkably, the thickness of the sheet-shaped dry rubber is usually in the range of 1 to 30 mm, preferably 2 to 25 mm, more preferably 3 to 15 mm, and particularly preferably 4 to 12 mm.

The width of the sheet-shaped dry rubber extruded from the screw-type extruder is appropriately selected according to the purpose of use, but it is usually in the range of 300 to 1,200 mm, preferably 400 to 1,000 mm, more preferably 500 to 800 mm.

The temperature of the dry rubber extruded from the screw-type extruder is not particularly limited, but it is usually in the range of 100 to 200°C, preferably 110 to 180°C, more preferably 120 to 160°C.

The water content of the dry rubber extruded from the screw-type extruder is not particularly limited, but it is usually less than 1% by weight, preferably 0.8% by weight or less, more preferably 0.6% by weight or less.

The complex viscosity ([η] 100°C) at 100°C of the sheet-shaped dry rubber extruded from the screw-type extruder is not particularly limited, but when it is usually in the range of 1,500 to 6,000 Pa·s, preferably 2,000 to 5,000 Pa·s, more preferably 2,500 to 4,000 Pa·s, and most preferably 2,500 to 3,500 Pa·s, it is preferable, since the extrudability and shape retention as a sheet are highly well-balanced. This means that, when the value of the complex viscosity ([η] 100°C) at 100°C is higher than the lower limit or higher, the extrudability can be more excellent, and when the value is lower than the upper limit or lower, collapse and breakage of the shape of the sheet-shaped dry rubber can be suppressed.

The sheet-shaped dry rubber extruded from the screw-type extruder may be folded to be used, but usually cut to be used.

The cutting of the sheet-shaped dry rubber is not particularly limited, but since the acrylic rubber of the present invention has strong stickiness, it is preferable that the sheet-shaped dry rubber is cut after cooling the same in order to continuously cut without entrapping air.

The cutting temperature of the sheet-shaped dry rubber is not particularly limited, but when the temperature is usually 60°C or lower, preferably 55°C or lower, more preferably 50°C or lower, it is preferable, since the cutting property and the productivity are highly well-balanced.

The complex viscosity ([η] 60°C) at 60°C of the sheet-shaped dry rubber is not particularly limited, but when it is usually 15,000 Pa·s or less, preferably 2,000 to 10,000 Pa·s, more preferably 2,500 to 7,000 Pa·s, and most preferably 2,700 to 5,500 Pa·s, it is preferable, since the cutting can be done continuously without entrapping air.

The ratio ([η] 100°C / [η] 60°C) of the complex viscosity ([η] 100°C) at 100°C to the complex viscosity ([η] 60°C) at 60°C of the sheet-shaped dry rubber is not particularly limited and may be appropriately selected according to the purpose of use, but it is usually 0.5 or more, preferably 0.6 or more, more preferably 0.7 or more, particularly preferably 0.8 or more, most preferably 0.85 or more, and when the upper limit value is usually 0.98 or less, preferably 0.97 or less,

more preferably 0.96 or less, particularly preferably 0.95 or less, most preferably 0.93 or less, it is preferable, since air entrapment is low, and cutting and productivity are highly well-balanced.

The method for cooling the sheet-shaped dry rubber is not particularly limited and may be left at room temperature. However, since the sheet-shaped dry rubber has a very low thermal conductivity of 0.15 to 0.35 W/mK, forced cooling such as an air-cooling method under ventilation or cooling, a water-spraying method for spraying water, or a dipping method for immersing in water is preferable for improving productivity, and the air cooling method under ventilation or cooling is particularly preferable.

By the air-cooling method for dry rubber sheets, for example, the sheet-shaped dry rubber can be extruded from a screw-type extruder onto a conveyor such as a belt conveyor and conveyed while being cooled by blowing cold air, so that the sheet-shaped dry rubber can be cooled. The temperature of the cold air is not particularly limited, but is usually in the range of 0 to 25°C, preferably 5 to 25°C, more preferably 10 to 20°C. The length to be cooled is not particularly limited, but it is usually 5 to 500 m, preferably 10 to 200 m, more preferably 20 to 100 m. Although the cooling rate of the sheet-shaped dry rubber is not particularly limited, when it is usually in the range of 50°C/hr or higher, more preferably 100°C/hr or higher, more preferably 150°C/hr or higher, it is preferable, since it is particularly easy to cut.

The cutting length of the sheet-shaped dry rubber is not particularly limited and may be appropriately selected according to the purpose of use, but it is usually in the range of 100 to 800 mm, preferably 200 to 500 mm, more preferably 250 to 450 mm.

The sheet-shaped acrylic rubber thus obtained is superior to the crumb-shaped acrylic rubber in operability and storage stability, processability, strength properties, and compression set resistance so that it can be used as it is or laminated and baled to be used.

Laminating process

The method for producing a bale-shaped acrylic rubber of the present invention is not particularly limited, but it is preferable to laminate the above-mentioned sheet-shaped dry rubber (the sheet-shaped acrylic rubber), since a bale-shaped acrylic rubber bale with little entrapment of air and excellent in storage stability can be obtained.

The lamination temperature of the sheet-shaped dry rubber is not particularly limited, but when it is usually 30°C or higher, preferably 35°C or higher, and more preferably 40°C or higher, it is preferable, since air entrapped during lamination can be released. The number of laminated layers may be appropriately selected according to the size or weight of the acrylic rubber bale. The bale-shaped acrylic rubber of the present invention is produced by the laminated sheet-shaped dry rubber being integrated by its own weight.

The bale-shaped acrylic rubber of the present invention thus obtained is excellent in operability and storage stability and excellent in processability, strength properties, and set compression resistance as compared with crumb-shaped acrylic rubber, and the bale-shaped acrylic rubber can be used by putting into a mixer such as a Banbury mixer or a roll as it is or after being cut into a required amount.

<Rubber Composition>

The rubber composition of the present invention is characterized by that it is produced by containing a rubber component including the above-mentioned acrylic rubber (including the sheet-shaped acrylic rubber and the bale-shaped acrylic rubber), a filler and a cross-linking agent.

The content of the acrylic rubber of the present invention in the rubber component may be selected according to the purpose of use, for example, usually 30% by weight or more, preferably 50% by weight or more, and more preferably 70% by weight or more.

As the rubber component, the acrylic rubber of the present invention can be used alone or in combination with other rubbers.

Examples of other rubbers include acrylic rubbers other than the acrylic rubbers of the present invention, natural rubbers, polybutadiene rubbers, polyisoprene rubbers, styrene-butadiene rubbers, acrylonitrile-butadiene rubbers, silicon rubbers, fluororubbers, olefin elastomers, styrene elastomers, vinyl chloride-based elastomers, polyester-based elastomers, polyamide-based elastomers, polyurethane-based elastomers, and polysiloxane-based elastomers.

These other rubbers can be used alone or in combination of two or more. The content of the other rubbers in the rubber component is appropriately selected within a range that does not impair the effects of the present invention, and is usually 70% by weight or less, preferably 50% by weight or less, and more preferably 30% by weight or less. The shape of the other rubbers may be crumb-shaped, sheet-shaped, bale-shaped, rod-shaped, or the like.

The filler is not particularly limited, but examples thereof include a reinforcing filler and a non-reinforcing filler, and the reinforcing filler is preferable.

Examples of the reinforcing filler include: carbon black such as furnace black, acetylene black, thermal black, channel black and graphite; silica such as wet silica, dry silica and colloidal silica; and the like. Examples of non-reinforcing

fillers include quartz powder, diatomaceous earth, zinc white, basic magnesium carbonate, activated calcium carbonate, magnesium silicate, aluminum silicate, titanium dioxide, talc, aluminum sulfate, calcium sulfate, barium sulfate, and the like.

These fillers can be used alone or in combination of two or more, and the compounding amount thereof, which is appropriately selected within a range that does not degrade the effects of the present invention, is usually in the range of 1 to 200 parts by weight, preferably 10 to 150 parts by weight, more preferably 20 to 100 parts by weight, with respect to 100 parts by weight of the rubber component.

The cross-linking agent is not particularly limited, but conventionally known cross-linking agents such as, for example, polyvalent amine compounds such as diamine compounds and carbonates thereof; sulfur compounds; sulfur donors; triazine thiol compounds; polyvalent epoxy compounds; organic carboxylic acid ammonium salts; organic peroxides; polyvalent carboxylic acids; a quaternary onium salt; an imidazole compound; an isocyanuric acid compound; an organic peroxide; a triazine compound; and the like can be used. Among these, polyvalent amine compounds, triazine compounds are preferable, and the polyvalent amine compounds are particularly preferable.

Examples of the polyvalent amine compound include: aliphatic polyvalent amine compounds such as hexamethylenediamine, hexamethylenediamine carbamate and N,N'-dicinnamylidene-1,6-hexanediamine; aromatic polyvalent amine compound such as 4,4'-methylenedianiline, p-phenylenediamine, m-phenylenediamine, 4,4'-diaminodiphenyl ether, 3,4'-diaminodiphenyl ether, 4,4'-(m-phenylenediisopropylidene) dianiline, 4,4'-(p-phenylenediisopropylidene) dianiline, 2,2'-bis [4-(4-aminophenoxy) phenyl] propane, 4,4'-diaminobenzanilide, 4,4'-bis (4-aminophenoxy) biphenyl, m-xylylenediamine, p-xylylenediamine, 1,3,5-benzenetriamine, and the like; and the like. Among these, hexamethylenediamine carbamate, 2,2'-bis [4-(4-aminophenoxy) phenyl] propane, and the like are preferable. These polyvalent amine compounds are particularly preferably used in combination with an acrylic rubber containing a carboxyl group.

Examples of the triazine compound include 6-trimercapto-s-triazine, 2-anilino-4,6-dithiol-s-triazine, 1-dibutylamino-3,5-dimercaptotriazine, 2-dibutylamino-4,6-dithiol-s-triazine, 1-phenylamino-3,5-dimercaptotriazine, 2,4,6-trimercapto-1,3,5-triazine, 1-hexylamino-3,5-dimercaptotriazine, and the like. Among these, triazine compound is preferably used particularly in combination with the acrylic rubber containing a halogen group.

These cross-linking agents may be used alone or in combination of two or more, and the compounding amount thereof with respect to 100 parts by weight of the rubber component is usually in the range of 0.001 to 20 parts by weight, preferably 0.1 to 10 parts by weight, more preferably 0.1 to 5 parts by weight. By setting the amount of the cross-linking agent to be in this range, it is possible to make the rubber elasticity sufficient while making the mechanical strength as the rubber cross-linked product excellent, which is preferable.

The rubber composition of the present invention may further contain other anti-aging agent than the phenolic anti-aging agent represented by the general formula (1). Other type of anti-aging agent is not particularly limited, but examples thereof include: phenolic anti-aging agents such as 2,6-di-t-butyl-4-methylphenol, 2,6-di-t-butylphenol, butylhydroxyanisole, 2,6-di-t-butyl-α-dimethylamino-p-cresol, octadecyl-3-(3,5-di-t-butyl-4-hydroxyphenyl) propionate, styrenated phenol, 2,2'-methylene-bis (6-α-methylbenzyl-p-cresol), 4,4'-methylenebis (2,6-di-t-butylphenol), 2,2'-methylene-bis (4-methyl-6-t-butylphenol), 2,4-bis [(octylthio) methyl]-6-methylphenol, 2,2'-thiobis-(4-methyl-6-t-butylphenol), 4,4'-thiobis-(6-t-butyl-o-cresol), 2,6-di-t-butyl-4-(4,6-bis (octylthio)-1,3,5-triazin-2-ylamino) phenol; phosphite type anti-aging agents such as tris (nonylphenyl) phosphite, diphenylisodecylphosphite, tetraphenyldipropyleneglycol diphosphite; sulfur ester-based anti-aging agents such as dilauryl thiodipropionate; amine-based anti-aging agents such as phenyl-α-naphthylamine, phenyl-β-naphthylamine, p-(p-toluenesulfonylamide)-diphenylamine, 4,4'-(α, α-dimethylbenzyl) diphenylamine, N,N-diphenyl-p-phenylenediamine, N-isopropyl-N'-phenyl-p-phenylenediamine, and butyraldehyde-aniline condensates; imidazole anti-aging agents such as 2-mercaptobenzimidazole; quinoline anti-aging agents such as 6-ethoxy-2,2,4-trimethyl-1,2-dihydroquinoline; hydroquinone anti-aging agents such as 2,5-di-(t-amyl) hydroquinone; and the like. Among these, amine-based anti-aging agents are particularly preferable.

These other anti-aging agents can be used alone or in combination of two or more, and the compounding amount thereof with respect to 100 parts by weight of the rubber component is in the range of 0.01 to 15 parts by weight, preferably 0.1 to 10 parts by weight, more preferably 1 to 5 parts by weight.

The rubber composition of the present invention contains the above-mentioned rubber component, a filler, a cross-linking agent, and, if necessary, other anti-aging agents than the general formula (1), and further optionally contain other additives, if necessary, commonly used in the art, for example, a cross-linking aid, a cross-linking accelerator, a cross-linking retarder, a silane coupling agent, a plasticizer, a processing aid, lubricants, pigments, colorants, antistatic agents, foaming agents and the like.

These other compounding agents may be used alone or in combination of two or more, and the compounding amount thereof is appropriately selected within a range that does not degrade the effects of the present invention.

Examples of the method for mixing the rubber composition of the present invention include any means conventionally used in the field of rubber processing, such as an open roll, a Banbury mixer, various kneaders, and the like can be used. As a the method for mixing, it is preferable, for example, to sufficiently mix components that are difficult to react or decompose with heat are sufficiently mixed, and then thereafter, mix a cross-linking agent, which is a component

that easily reacts or decomposes with heat, and the like for a short time at a temperature that reaction and decomposition do not occur.

<Rubber Cross-linked Product>

The rubber cross-linked product of the present invention is obtained by cross-linking the above rubber composition. The rubber cross-linked product of the present invention can be produced by molding the rubber composition of the present invention by a molding machine applicable for a desired shape, for example, an extruder, an injection molding machine, a compressor and a roll, occurring a cross-linking reaction by heating, and fixing the shape as a rubber cross-linked product. In this case, the molding may be performed in advance and then cross-linked, or the molding and the cross-linking may be performed simultaneously. The molding temperature is usually 10 to 200°C, preferably 25 to 150°C. The cross-linking temperature is usually 100 to 250°C, preferably 130 to 220°C, more preferably 150 to 200°C. The cross-linking time is usually 0.1 minutes to 10 hours, preferably 1 minute to 5 hours. As a heating method, a known method has been used for cross-linking rubber such as press heating, steam heating, oven heating, and hot air heating may be appropriately selected.

The rubber cross-linked product of the present invention may be further heated for secondary cross-linking depending on the shape and size of the rubber cross-linked product. The secondary cross-linking varies depending on the heating method, the cross-linking temperature, the shape, and the like, but the secondary cross-linking is preferably performed for 1 to 48 hours. The heating method and heating temperature may be appropriately selected.

The rubber cross-linked product of the present invention is preferably used as: for example, sealing materials such as an O-ring, a packing, a diaphragm, an oil seal, a shaft seal, a bearing seal, a mechanical seal, a well head seal, an electric / electronic device seal, an air compression device; various kinds of gaskets such as a rocker cover gasket mounted on a connecting portion between a cylinder block and a cylinder head, an oil pan gasket mounted on a connecting portion between an oil pan and a cylinder head or a transmission case, a gasket for a fuel cell separator mounted between a pair of housings sandwiching a unit cell including a positive electrode, an electrolyte plate and a negative electrode, a gasket for hard disk drive top covers; cushioning materials, antivibration materials; electric wire coating materials; industrial belts; tubes and hoses; sheets; and the like.

The rubber cross-linked product of the present invention is also preferably used as an extrusion-molded product and mold cross-linked product used for automobiles, for example, fuel oil system hoses for fuel tank such as a fuel hose, a filler neck hose, a vent hose, a vapor hose, an oil hose, and the like; air system hoses such as a turbo air hose, a mission control hose, and the like; various hoses such as a radiator hose, a heater hose, a brake hose, an air conditioner hose, and the like.

<Device Configuration used for Production of Acrylic Rubber>

Next, a device configuration used for manufacturing the sheet-shaped or bale-shaped acrylic rubber according to one embodiment of the present invention will be described. FIG. 1 is a diagram schematically showing an example of an acrylic rubber production system having a device configuration used for producing the sheet-shaped or bale-shaped acrylic rubber according to one embodiment of the present invention. For producing acrylic rubber of the present invention, for example, the acrylic rubber production system 1 shown in FIG. 1 can be used.

The acrylic rubber production system shown in FIG. 1 is composed of an emulsion polymerization reactor (not shown), a coagulation device 3, a washing device 4, a drainer 43, a screw-type extruder 5, a cooling device 6, and a baling device 7.

The emulsion polymerization reactor is configured to perform the above-mentioned emulsion polymerization process. Although not shown in FIG. 1, this emulsion polymerization reactor has, for example, a polymerization reaction tank, a temperature control unit for controlling a reaction temperature, and a stirring device provided with a motor and a stirring blade. In the emulsion polymerization reactor, water and an emulsifier are mixed with a monomer component for forming an acrylic rubber, and the mixture is emulsified while being appropriately stirred by a stirrer, and emulsion polymerization is performed in the presence of a polymerization catalyst, thereby to obtain emulsion polymerization liquid. The addition of the phenolic anti-aging agent represented by the general formula (1) to the emulsion polymerization solution can be carried out as it is in the emulsion polymerization reactor. The emulsion polymerization reactor may be a batch type, a semi-batch type or a continuous type, and may be a tank-type reactor or a tube-type reactor.

The coagulation device 3 shown in FIG. 1 is configured to perform the process related to the coagulation process described above. As schematically shown in FIG. 1, the coagulation device 3 includes, for example, a stirring tank 30, a heating unit 31 that heats the inside of the stirring tank 30, a temperature control unit (not shown) that controls the temperature inside the stirring tank 30, a stirring device 34 having a motor 32 and a stirring blade 33, and a drive control unit (not shown) that controls the rotation number and the rotation speed of the stirring blade 33. In the coagulation device 3, hydrous crumbs can be produced by bringing the emulsion polymerization liquid prepared in the emulsion

polymerization reactor into contact with the coagulant liquid to coagulate the emulsion polymerization liquid.

In the coagulation device 3, for example, the contact between the emulsion polymerization liquid and coagulant liquid is performed by adding the emulsion polymerization liquid to the stirred coagulant liquid. This means that the stirring tank 30 of the coagulation device 3 is filled with the coagulant liquid, and the emulsion polymerization liquid is added to and brought into contact with the coagulant liquid to coagulate the emulsion polymerization liquid, thereby generating hydrous crumbs.

The heating unit 31 of the coagulation device 3 is configured to heat the coagulant liquid with which the stirring tank 30 is filled. Further, the temperature control unit of the coagulation device 3 is configured to control the temperature inside the stirring tank 30 by controlling the heating operation by the heating unit 31 while monitoring the temperature inside the stirring tank 30 measured by a thermometer. The coagulant liquid in the stirring tank 30 is controlled by the temperature control unit to be usually in the range of 40°C or higher, preferably 40 to 90°C, more preferably 50 to 80°C.

The stirring device 34 of the coagulation device 3 is configured to stir the coagulant liquid filled in the stirring tank 30. Specifically, the stirring device 34 includes a motor 32 that generates rotational power, and a stirring blade 33 that extends in a direction perpendicular to the rotation axis of the motor 32. The stirring blades 33 can rotate the coagulant liquid, which is coagulant solution, filled in the stirring tank 30 about the rotation axis by the rotational power of the motor 32 to flow the coagulant liquid. The shape and size of the stirring blade 33, the number of installations, and the like are not particularly limited.

The drive control unit of the coagulation device 3 is configured to control the rotational drive of the motor 32 of the stirring device 34 and set the rotation speed of the stirring blades 33 of the stirring device 34 to predetermined values. The stirring speed of the stirring blade 33 is controlled by the drive controller so that the stirring speed of the coagulant liquid is controlled to be, for example, usually in the range of 100 rpm or more, preferably 200 to 1,000 rpm, more preferably 300 to 900 rpm, and particularly preferably 400 to 800 rpm. The rotation of the stirring blade 33 is controlled by the drive controller so that the peripheral speed of the coagulant liquid is usually 0.5 m/s or higher, preferably 1 m/s or higher, more preferably 1.5 m/s or higher, particularly preferably 2 m/s or higher, most preferably 2.5 m/s or higher. Further, the rotation of the stirring blade 33 is controlled by the drive control unit so that the upper limit of the peripheral speed of the coagulant liquid is usually 50 m/s or lower, preferably 30 m/s or lower, more preferably 25 m/s or lower, and most preferably 20 m/s or lower.

The washing device 4 shown in FIG. 1 is configured to perform the above-described washing process. As schematically shown in FIG. 1, the washing device 4 includes, for example, a washing tank 40, a heating unit 41 that heats the inside of the washing tank 40, and a temperature control unit (not shown) that controls the temperature inside the washing tank 40. In the washing device 4, by mixing the hydrous crumbs produced in the coagulation device 3 with a large amount of water for washing, the ash content in the finally obtained the sheet-shaped or bale-shaped acrylic rubber can be effectively reduced.

The heating unit 41 of the washing device 4 is configured to heat the inside of the washing tank 40. In addition, the temperature control unit of the washing device 4 controls the temperature inside the washing tank 40 by controlling the heating operation by the heating unit 41 while monitoring the temperature inside the washing tank 40 measured by the thermometer. As described above, the temperature of the washing water in the washing tank 40 is controlled to be usually in the range of 40°C or higher, preferably 40 to 100°C, more preferably 50 to 90°C, and most preferably 60 to 80°C.

The hydrous crumb washed in the washing device 4 is supplied to the screw-type extruder 5 which performs a dehydration process and a drying process. At this time, it is preferable that the hydrous crumb after washing is supplied to the screw-type extruder 5 through a drainer 43 capable of separating free water. For the drainer 43, for example, a wire mesh, a screen, an electric sifter, or the like can be used.

Further, when the hydrous crumb after washing is supplied to the screw-type extruder 5, the temperature of the hydrous crumb is preferably 40°C or higher, more preferably 60°C or higher. By setting the temperature of water used for washing in the washing device 4, for example, to 60°C or higher (for example, 70°C), the temperature of the hydrous crumbs when supplied to the screw-type extruder 5 is maintained at 60°C or higher. Otherwise, the hydrous crumbs may be heated to a temperature of 40°C or higher, preferably 60°C or higher when being conveyed from the washing device 4 to the screw-type extruder 5. This makes it possible to effectively perform the dehydration process and the drying process, which are the subsequent processes, and to significantly reduce the water content of the finally obtained dried rubber.

The screw-type extruder 5 shown in FIG. 1 is configured to perform the processes related to the aforementioned dehydration process and the drying process. Although a screw-type extruder 5 is illustrated in FIG. 1 as a preferred example, a centrifuge, a squeezer, or the like may be used as a dehydrator that performs the process related to the dehydration process, and a hot air dryer, a reduced pressure dryer, an expander dryer, a kneader type dryer or the like may be used as a dryer that performs the process related to the drying process.

The screw-type extruder 5 is configured to mold the dried rubber obtained through the dehydration process and the drying process into a predetermined shape and to discharge the dried rubber. Specifically, the screw-type extruder 5 is provided with: a dehydration barrel section 53 having a function as a dehydrator to dehydrate the hydrous

crumb washed by the washing device 4; a drying barrel section 54 having a function as a dryer for drying the hydrous crumb; and a die 59 having a forming function to form a hydrous crumb on the downstream side of the screw-type extruder 5.

The configuration of the screw-type extruder 5 will be described below with reference to FIG. 2. FIG. 2 shows the configuration of a specific suitable example as the screw-type extruder 5 shown in FIG. 1. By the screw-type extruder 5, the above-described dehydration process and drying process can be suitably performed.

The screw-type extruder 5 shown in FIG. 2 is a twin-screw-type extruder / dryer including a pair of screws (not shown) in a barrel section 51. The screw-type extruder 5 has a drive unit 50 that rotationally drives a pair of screws in the barrel section 51. The drive unit 50 is attached to an upstream end (left end in FIG. 2) of the barrel section 51. Further, the screw-type extruder 5 has a die 59 at a downstream end (right end in FIG. 2) of the barrel section 51.

The barrel section 51 has a supply barrel section 52, a dehydration barrel section 53, and a drying barrel section 54 from the upstream side to the downstream side (from the left side to the right side in FIG. 2).

The supply barrel section 52 is composed of two supply barrels, which are a first supply barrel 52a and a second supply barrel 52b.

Further, the dehydration barrel section 53 is composed of three dehydration barrels, which are a first dehydration barrel 53a, a second dehydration barrel 53b and a third dehydration barrel 53c.

The drying barrel section 54 includes eight drying barrels, which are a first drying barrel 54a, a second drying barrel 54b, a third drying barrel 54c, a fourth drying barrel 54d, a fifth drying barrel 54e, a sixth drying barrel 54f, a seventh drying barrel 54g, and an eighth drying barrel 54h.

Thus, the barrel section 51 is configured by connecting the 13 divided barrels 52a to 52b, 53a to 53c, and 54a to 54h from the upstream side to the downstream side.

Further, the screw-type extruder 5 has a heating means (not shown) to individually heat each of the barrels 52a to 52b, 53a to 53c, and 54a to 54h. The hydrous crumbs in each of the barrels 52a to 52b, 53a to 53c, and 54a to 54h are heated to a predetermined temperature by the heating means. The heating means is provided with a number corresponding to each barrel 52a to 52b, 53a to 53c, 54a to 54h. As such a heating means, for example, a configuration in which high temperature steam is supplied from a steam supply means to a steam distribution jacket formed in each barrel 52a to 52b, 53a to 53c, 54a to 54h is adopted, but the configuration is not limited to this. Further, the screw-type extruder 5 has a temperature control means (not shown) to control the set temperature of each heating means corresponding to each barrel 52a to 52b, 53a to 53c, 54a to 54h.

It should be noted that the number of supply barrels, dehydration barrels, and drying barrels constituting the barrel sections 52, 53, and 54 of the barrel section 51 is not limited to the embodiment shown in FIG.2, but the number can be set in accordance with the water content of the hydrous crumbs of the acrylic rubber to be dried and the like.

For example, the number of supply barrels installed in the supply barrel section 52 is, for example, 1 to 3. Further, the number of dehydration barrels installed in the dehydration barrel section 53 is preferably, for example, 2 to 10, and more preferably 3 to 6, since the hydrous crumbs of the sticky acrylic rubber can be efficiently dehydrated. Further, the number of the drying barrels installed in the drying barrel section 54 is, for example, preferably 2 to 10, and more preferably 3 to 8.

The pair of screws in the barrel section 51 are rotationally driven by a driving means such as a motor stored in the driving unit 50. The pair of screws, extending from the upstream side to the downstream side in the barrel section 51, is rotationally driven so that the pair of screws can convey the hydrous crumbs to the downstream side while mixing the hydrous crumbs supplied to the supply barrel section 52. The pair of screws is preferably a biaxial meshing type in which peaks and troughs are meshed with each other, whereby the dehydration efficiency and drying efficiency of the hydrous crumbs can be increased.

Further, the rotation direction of the pair of screws may be the same direction or different directions, but from the viewpoint of self-cleaning performance, a type that rotates in the same direction is preferable. The screw shape of the pair of screws is not particularly limited and may be any shape required for each barrel section 52, 53, 54.

The supply barrel section 52 is an area for supplying the hydrous crumbs into the barrel section 51. The first supply barrel 52a of the supply barrel section 52 has a feed port 55 provided therewith for supplying the hydrous crumbs into the barrel section 51.

The dehydration barrel section 53 is an area for separating and discharging a liquid (serum water) containing a coagulant from hydrous crumbs.

The first to third dehydration barrels 53a to 53c, constituting the dehydration barrel section 53, have dehydration slits 56a, 56b and 56c for discharging the moisture of the hydrous crumbs to the outside, respectively. A plurality of dehydrating slits 56a, 56b, 56c are formed in each of the dehydration barrels 53a to 53c.

The slit width of each dehydration slit 56a, 56b, 56c, that is, the opening may be appropriately selected according to the use conditions, and is usually 0.01 to 5 mm. From the viewpoint that the loss of the hydrous crumb is small and the dehydration of hydrous crumb can be efficiently performed, it is preferably 0.1 to 1 mm, and more preferably 0.2 to 0.6 mm.

There are two cases to remove water from the hydrous crumbs in the dehydration barrels 53a to 53c of the dehydration barrel section 53, which are a case to remove water in a liquid form from each of the dehydration slits 56a, 56b and 56c and to a case to remove water in a vapor state. In the dehydration barrel section 53 of the present embodiment, for distinction of the two cases, the case of removing water in a liquid state is defined as drainage, and the case of removing in a vapor state is defined as steam exhausting.

In the dehydration barrel section 53, it is preferable to use drainage and steam exhausting in combination, since it is possible to efficiently reduce the water content of the sticky acrylic rubber. In the dehydration barrel section 53, which of the first to third dehydration barrels 53a to 53c is to be used for drainage or discharging steam may be appropriately set according to the purpose of use, but it is preferable to increase the number of dehydration barrels for drainage in a case of reducing ash content in usually produced acrylic rubber. In that case, for example, as shown in FIG. 2, the first and second dehydration barrels 53a and 53b on the upstream side perform drainage, and the third dehydration barrel 53c on the downstream side performs steam exhausting. Further, it may be considered that, for example, when the dehydration barrel section 53 has four dehydration barrels, a mode in which, for example, three upstream dehydration barrels perform drainage and one downstream dehydration barrel performs steam exhausting. On the other hand, in the case of reducing the water content, it is advantageous to increase the number of dehydration barrels for steam exhausting.

As described in the above-mentioned dehydration / drying process, the set temperature of the dehydration barrel section 53 is usually in the range of 60 to 150°C, preferably 70 to 140°C, and more preferably 80 to 130°C. The set temperature of the dehydration barrel for dehydration in a drained state is usually in the range of 60 to 120°C, preferably 70 to 110°C, and more preferably 80 to 100°C. The set temperature of the dehydration barrel for dehydration in the steam exhausting state is usually in the range of 100 to 150°C, preferably 105 to 140°C, and more preferably 110 to 130°C.

The drying barrel section 54 is an area for drying the hydrous crumbs after dehydration under reduced pressure. Out of the first to eighth drying barrels 54a to 54h forming the drying barrel section 54, the second drying barrel 54b, the fourth drying barrel 54d, the sixth drying barrel 54f, and the eighth drying barrel 54h are provided with vent ports 58a, 58b, 58c, 58d for deaeration, respectively. A vent pipe (not shown) is connected to each of the vent ports 58a, 58b, 58c, 58d.

A vacuum pump (not shown) is connected to the end of each vent pipe, and the inside of the drying barrel 54 is depressurized to a predetermined pressure by the operation of these vacuum pumps. The screw-type extruder 5 has pressure control means (not shown) for controlling the operation of the vacuum pumps and controlling the degree of pressure reduction in the drying barrel section 54.

The degree of pressure reduction in the drying barrel section 54 may be appropriately selected, but as described above, it is usually set to 1 to 50 kPa, preferably 2 to 30 kPa, and more preferably 3 to 20 kPa.

The set temperature in the drying barrel section 54 may be appropriately selected, but as described above, it is usually set to 100 to 250°C, preferably 110 to 200°C, and more preferably 120 to 180°C.

In each of the drying barrels 54a to 54h forming the drying barrel section 54, the temperature thereof may be set to an approximate value of all the drying barrels 54a to 54h or different values, but it is preferable to set the temperature of the downstream side (the side of the die 59) higher than the temperature of the upstream side (the side of the dehydration barrel section 53), since the drying efficiency is improved.

The die 59 is a mold arranged at the downstream end of the barrel section 51 and has a discharge port having a predetermined nozzle shape. The acrylic rubber dried in the drying barrel 54 passes through the discharge port of the die 59 to be extruded into a shape corresponding to the predetermined nozzle shape. The acrylic rubber that passes through the die 59 molded in various shapes such as a granular shape, a columnar shape, a round bar shape, and a sheet shape, in accordance with the nozzle shape of the die 59. For example, by making the nozzle shape of the die 59 a substantially rectangular shape, the acrylic rubber passing through the die 59 can be extruded and molded in a sheet shape. A breaker plate or a wire net may or may not be provided between the screw and the die 59.

According to the screw-type extruder 5 according to the present embodiment, the hydrous crumbs of the raw material acrylic rubber are extruded into a sheet-shaped dry rubber in a following way.

The hydrous crumbs of acrylic rubber obtained through the washing process is supplied to the supply barrel section 52 from the feed port 55. The hydrous crumb supplied to the supply barrel section 52 is sent from the supply barrel section 52 to the dehydration barrel section 53 by rotation of a pair of screws in the barrel section 51. In the dehydration barrel section 53, as described above, the water contained in the hydrous crumbs is drained or the steam is discharged from the dehydration slits 56a, 56b, and 56c provided in the first to third dehydration barrels 53a to 53c, respectively, so that the hydrous crumbs are dehydrated.

The hydrous crumbs dehydrated in the dehydration barrel section 53 is sent to the drying barrel section 54 by rotation of a pair of screws in the barrel section 51. The hydrous crumbs sent to the drying barrel section 54 are plasticized and mixed to form a melt, which is conveyed to the downstream side while being heated. Then, the water contained in the melt of the acrylic rubber is vaporized, and the water (vapor) is discharged to the outside through vent pipes (not

shown) connected to the vent ports 58a, 58b, 58c, 58d.

During passing through the drying barrel section 54 as described above, the hydrous crumbs are dried to become a melt of acrylic rubber, so that the acrylic rubber is supplied to the die 59 by the rotation of a pair of screws in the barrel section 51, to be formed into a sheet shape, is extruded from the die 59 as a dried rubber.

Hereinafter, an example of operating conditions of the screw extruder 5 according to the present embodiment will be described.

The rotation speed (N) of the pair of screws in the barrel section 51 may be appropriately selected according to various conditions, and is usually 10 to 1,000 rpm, and since the water content and the gel amount of the acrylic rubber bale can be efficiently reduced, the rotation speed (N) of the pair of screws in the barrel section 51 is preferably 50 to 750 rpm, more preferably 100 to 500 rpm, and most preferably 120 to 300 rpm.

The extrusion rate (Q) of the acrylic rubber is not particularly limited, but it is usually 100 to 1,500 kg/hr, preferably 300 to 1,200 kg/hr, more preferably 400 to 1,000 kg/hr, and most preferably 500 to 800 kg/hr.

The ratio (Q / N) of the extrusion amount (Q) of the acrylic rubber to the rotation speed (N) of the screw is not particularly limited, but it is usually 1 to 20, preferably 2 to 10, and more preferably 3 to 8, and particularly preferably 4 to 6.

The cooling device 6 shown in FIG. 1 is configured to cool the dried rubber obtained through the dehydration process using a dehydrator and the drying process using a dryer. As a cooling method by the cooling device 6, various methods including an air cooling method in which air is blown or under cooling, a water spraying method in which water is sprayed, a dipping method in which water is immersed, and the like can be adopted. Otherwise, the dried rubber may be cooled by leaving it at room temperature.

As described above, the dry rubber extruded from the screw-type extruder 5 is extruded and molded in various shapes such as a granular shape, a columnar shape, a round bar shape, and a sheet shape, in accordance with the nozzle shape of the die 59. Hereinafter, as an example of the cooling device 6, a transport-type cooling device 60 that cools the sheet-shaped dried rubber (sheet-shaped acrylic rubber) 10 will be described with reference to FIG. 3.

FIG. 3 shows a configuration of a conveyor-type cooling device 60 suitable as the cooling device 6 shown in FIG. 1. The conveyor-type cooling device 60 shown in FIG. 3 is configured to cool the sheet-shaped dry rubber 10 discharged from the discharge port of the die 59 of the screw-type extruder 5 by an air cooling method while conveying the sheet-type dry rubber 10. By using this conveyor-type cooling device 60, the sheet-shaped dry rubber 10 discharged from the screw-type extruder 5 can be suitably cooled.

The conveyor-type cooling device 60 shown in FIG. 3 is used, for example, directly connected to the die 59 of the screw-type extruder 5 shown in FIG. 2 or installed close to the die 59.

The conveyor-type cooling device 60 is provided with a conveyor 61 that conveys the sheet-shaped dry rubber 10 discharged from the die 59 of the screw-type extruder 5 in the direction of arrow A in FIG. 3 and provided with a cooling means 65 for blowing cool air to the sheet-shaped dry rubber 10 on the conveyor 61.

The conveyor 61 has rollers 62 and 63, and a conveyor belt 64 that is wound around these rollers 62 and 63 and on which the sheet-shaped dry rubber 10 is placed. The conveyor 61 is configured to continuously convey the sheet-shaped dry rubber 10 discharged from the die 59 of the screw-type extruder 5 onto the conveyor belt 64 to the downstream side (right side in FIG. 3).

The cooling means 65 is not particularly limited, but examples thereof include a cooling means that has a structure capable of blowing cooling air sent from a cooling air generation means (not shown) onto the surface of the sheet-shaped dry rubber 10 on the conveyor belt 64.

The length L1 of the conveyor 61 and the cooling means 65 (the length of the portion to which the cooling air can be blown) of the transport cooling device 60 is not particularly limited, but is, for example, 10 to 100 m, preferably 20 to 50 m. Further, the conveyance speed of the sheet-shaped dry rubber 10 in the conveyor-type cooling device 60, which can be appropriately adjusted in accordance with the length L1 of the conveyor 61 and the cooling means 65, the discharge speed of the sheet-shaped dry rubber 10 discharged from the die 59 of the screw-type extruder 5, a target cooling speed, a target cooling time, and the like, is, for example, 10 to 100 m/hr, and more preferably 15 to 70 m/hr.

According to the conveyor-type cooling device 60 shown in FIG. 3, the sheet-shaped dry rubber 10 discharged from the die 59 of the screw-type extruder 5 is conveyed by the conveyor 61 while the sheet-shaped dry rubber 10 is cooled by the cooling means 65 by blowing the cooling air to the sheet-shaped dry rubber 10.

It should be noted that the conveyor-type cooling device 60 is not particularly limited to the configuration including one conveyor 61 and one cooling means 65 as shown in FIG. 3, but it may be configured to be provided with two or more conveyors 61 and two or more cooling means 65 corresponding thereto. In that case, the total length of each of the two or more conveyors 61 and the cooling means 65 may be set within the above range.

The bale forming device 7 shown in FIG. 1 is configured to process a dried rubber extruded from a screw-type extruder 5 and cooled by a cooling device 6 to produce a bale, which is shaped in a chunk of a block. As described above, the screw-type extruder 5 is capable of extruding and molding the dry rubber in various shapes such as granular shape, columnar shape, a round bar shape, and a sheet shape, and the baling device 7 is configured to bale the dry rubber molded in the various shapes. The weight and shape of the bale-shaped acrylic rubber produced by the baling

device 7 are not particularly limited, but, for example, a substantially rectangular parallelepiped bale-shaped acrylic rubber weighing about 20 kg is produced.

The baling device 7 may produce the bale-shaped acrylic rubber by being provided with a baler and compressing the cooled dry rubber by the baler.

Further, when the sheet-shaped dry rubber 10 (the acrylic rubber sheet) is produced by the screw-type extruder 5, the bale-shaped acrylic rubber 10 may be produced by laminating the sheet-shaped dry rubber 10. For example, a cutting mechanism for cutting the sheet-shaped dry rubber 10 may be provided in the baling device 7 provided on the downstream side of the conveyor-type cooling device 60 shown in FIG. 3. Specifically, for example, the cutting mechanism of the baling device 7 is configured to continuously cuts the cooled sheet-shaped dry rubber 10 at predetermined intervals and processes it into a cut sheet-shaped dry rubber 16 having a predetermined size. By laminating a plurality of cut sheet-shaped dry rubbers 16 cut into a predetermined size by the cutting mechanism, the bale-shaped acrylic rubber in which the cut sheet-shaped dry rubbers 16 are laminated can be produced.

When producing the bale-shaped acrylic rubber bale in which the cut sheet dry rubbers 16 are laminated, it is preferable to laminate the cut sheet dry rubbers 16 at 40°C or higher, for example. By laminating the cut sheet dry rubbers 16 at 40°C or higher, good air release is realized by further cooling and compression by its own weight.

[EXAMPLES]

The present invention will be described more specifically below with reference to Examples, and Comparative Examples. In addition, "part", "%" and "ratio" in each example are based on weight unless otherwise specified. Various chemical or physical properties were evaluated according to the following methods.

[Monomer Composition]

Regarding the monomer composition in the acrylic rubber, the monomer composition of each monomer unit in the acrylic rubber was confirmed by H-NMR, and existence of the activity of the reactive group remained in the acrylic rubber and the content of the reactive group were confirmed by the following test method.

Further, the content ratio of each monomer unit in the acrylic rubber was calculated from the amount of each monomer used in the polymerization reaction and the polymerization conversion rate. Specifically, the content ratio of each monomer unit was regarded as the same as the amount of each monomer used, since the polymerization reaction was an emulsion polymerization reaction, and the polymerization conversion rate was about 100% in which no unreacted monomer could be confirmed.

[Reactive Group Content]

The content of the reactive group of the acrylic rubber was measured by the following method:

(1) The amount of carboxyl group was calculated by dissolving the acrylic rubber in acetone and performing potentiometric titration with a potassium hydroxide solution.
(2) The amount of epoxy group was calculated by dissolving the acrylic rubber in methyl ethyl ketone, adding a specified amount of hydrochloric acid thereto to react with epoxy groups, and titrating the amount of residual hydrochloric acid with potassium hydroxide.
(3) The amount of chlorine was calculated by completely burning the acrylic rubber in a combustion flask, absorbing the generated chlorine in water, and titrating with silver nitrate.

[Anti-Aging Agent Content]

The anti-aging agent content (%) in the acrylic rubber was determined by dissolving the acrylic rubber sheet or the acrylic rubber bale in tetrahydrofuran and performing gel permeation chromatography (GPC) measurement, and calculating based on a calibration curve.

[Ash Content]

The ash content (%) contained in the acrylic rubber was measured according to JIS K6228 A method.

[Ash Component Content]

The amount of each component (ppm) in the ash of the acrylic rubber was measured by XRF using a ZSX

Primus (manufactured by Rigaku Corporation) by pressing the ash collected during the above ash content measurement onto a titration filter paper having a diameter of 20 mm.

[Glass Transition Temperature (Tg)]

The glass transition temperature (Tg) of the acrylic rubber was measured using a differential scanning calorimeter (DSC, product name "X-DSC7000", manufactured by Hitachi High-Tech Science Corporation).

[pH]

The pH of the acrylic rubber was measured with a pH electrode after dissolving 6 g (± 0.05 g) of the acrylic rubber in 100 g of tetrahydrofuran and thereafter adding 2.0 ml of distilled water to confirm that the acrylic rubber was completely dissolved.

[Water Content]

The water content (%) of the acrylic rubber was measured according to JIS K6238-1: Oven A (volatile content measurement) method.

[Molecular Weight and Molecular Weight Distribution]

The weight average molecular weight (Mw) and the molecular weight distribution (Mz / Mw) of the acrylic rubber are an absolute molecular weight and an absolute molecular weight distribution, respectively, measured by the GPC-MALS method in which a solution in which 0.05 mol / L of lithium chloride and 0.01% of 37% concentrated hydrochloric acid are added to dimethylformamide is used as a solvent. To be specific, a multi-angle laser light scattering photometer (MALS) and a refractive index detector (RI) were incorporated into a GPC (Gel Permeation Chromatography) device, and the light scattering intensity and the difference in the refractive index of the molecular chain solution size-separated were measured by the GPC device by following the elution time, so that the molecular weight of the solute and its content rate were sequentially calculated and determined. Measurement conditions and measurement methods of the GPC device are as follows:

Column: TSKgel α-M 2 pieces ((φ7.8 mm×30 cm, manufactured by Tosoh Corporation)
Column Temperature: 40°C
Flow Rate: 0.8 ml/mm
Sample Preparation: 5 ml of the solvent was added to 10 mg of the sample, and the mixture was gently stirred at room temperature (dissolution was visually confirmed). Thereafter, filtration was performed using a 0.5 μm filter.

[Complex Viscosity]

The complex viscosity η at each temperature of the acrylic rubber was determined by measuring the temperature dispersion (40 to 120°C) at a strain of 473% and 1 Hz using a dynamic viscoelasticity measuring device "Rubber Process Analyzer RPA-2000" (manufactured by Alpha Technology Co., Ltd.). Here, of the above-mentioned dynamic viscoelasticities, the dynamic viscoelasticity at 60°C is defined as the complex viscosity η (60°C), and the dynamic viscoelasticity at 100°C is defined as the complex viscosity η (100°C), and the values η (100°C) / η (60°C) and η (60°C) / η (100°C) were calculated.

[Gel Amount]

The gel amount (%) of the acrylic rubber is the amount of gel insoluble in methyl ethyl ketone, and was determined by the following method:

About 0.2 g of the acrylic rubber was weighed (X g), immersed in 100 ml of methyl ethyl ketone, left at room temperature for 24 hours, and then a filtrate obtained by filtering out the insolubles in methyl ethyl ketone using an 80 mesh wire net, that is, a filtrate in which only the rubber component soluble in methyl ethyl ketone was dissolved. The dry solid content (Y g) obtained by evaporating and drying and coagulating the filtrate was weighed and calculated by the following formula.

$$\text{Gel amount (\%)} = 100 \times (X-Y) / X$$

[Specific Gravity]

The specific gravity of the acrylic rubber was measured according to JIS K6268 cross-linked rubber-method A of density measurement.

[Storage Stability Evaluation]

Regarding the storage stability of the rubber sample, the rubber mixture of the rubber sample was put into a constant temperature and humidity chamber of 45°C × 80% RH for 7 days, and the rubber sample before and after the test was used as a rubber mixture and a cross-linking test was performed at 180°C for 10 minutes using a rubber vulcanization tester (a moving die rheometer MDR; manufactured by Alpha Technology Co., Ltd., and the change rate of cross-link density, which is the difference (MH-ML) between the maximum torque (MH) and the minimum torque (ML), was calculated and evaluated using an index with Comparative Example 1 being 100 (the smaller the index, the better the storage stability).

[Water Resistance Evaluation]

The water resistance of the cross-linked product of the rubber sample was evaluated according to JIS K 6258 by conducting an immersion test by immersing the cross-linked product of the sample rubber in a distilled water of 85°C for 100 hours, calculating volume change rate before and after the immersion according to the equation below, and evaluated by an index where Comparative Example 1 is 100. (the smaller the index, the better the water resistance).

$$\text{Volume change rate before and after the immersion (\%)} = ((\text{test piece volume after the immersion} - \text{test piece volume before the immersion}) / \text{test piece volume before the immersion}) \times 100.$$

[Normal Physical Property Evaluation]

The normal physical properties of the rubber sample were evaluated according to JIS K6251 by measuring the breaking strength, 100% tensile stress and breaking elongation of the rubber cross-linked product of the rubber sample, and were evaluated based on the following criteria:

(1)The breaking strength was evaluated as ◎, good, for 10 MPa or more and as ×, unacceptable, for less than 10 MPa.
(2) For 100% tensile stress, 5 MPa or more was evaluated as ◎ and less than 5 MPa was evaluated as ×.
(3) The breaking elongation was evaluated as ◎ for 150% or more and as × for less than 150%.

[Example 1]

46 parts of pure water, 74.5 parts of ethyl acrylate, 17 parts of n-butyl acrylate, 7 parts of methoxyethyl acrylate, and 1.5 parts of mono-n-butyl fumarate, and 1.8 parts octyloxydioxyethylene phosphate sodium salt as an emulsifier were mixed in a mixing container provided with a homomixer, and stirred, thereby to obtain a monomer emulsion.
Subsequently, 170 parts of pure water and 3 parts of the monomer emulsion obtained as mentioned above were put into a polymerization reaction tank provided with a thermometer and a stirrer, and cooled to 12°C under a nitrogen stream. Subsequently, the rest of the monomer emulsion, 0.00033 part of ferrous sulfate, 0.264 part of sodium ascorbate, and 0.22 part of potassium persulfate were continuously dropped into the polymerization reaction tank over 3 hours. Thereafter, the reaction was continued while maintaining the temperature in the polymerization reaction tank at 23°C, and upon the confirmation that the polymerization conversion rate reached about 100%, hydroquinone as a polymerization terminator was added to terminate the polymerization reaction, and 1 part of 3-(4-hydroxy-3,5-di-tert-butylphenyl) octyl propionate (Irganox1135; manufactured by BASF SE) was added to obtain the emulsion polymerization liquid.
In the coagulation tank provided with a thermometer and a stirring device, 2% magnesium sulfate aqueous solution (coagulant liquid) was heated to 80°C and vigorously stirred (rotation speed of 600 rpm, peripheral speed of 3.1 m/s). The emulsion polymerization liquid added with the anti-aging agent as described above and heated to 80°C was continuously added to the magnesium sulfate aqueous solution, so that the polymer was coagulated, and filtered to obtain the hydrous crumbs.
In next step, 194 parts of hot water (70°C) was added to the coagulation tank and stirred for 15 minutes, and

then water was discharged, and again 194 parts of hot water (70°C) was added and stirred for 15 minutes to wash the hydrous crumbs. The washed hydrous crumbs (hydrous crumbs temperature 65°C) were dehydrated (drainage) to water content of 20% by weight and then dried to water content of 0.4% by weight using the screw-type extruder to obtain the acrylic rubber (A). Here, the temperature of the drying barrel section of the screw-type extruder was set to be inclined from 120 to 180°C.

Reactive group content, ash content, ash component content, glass transition temperature (Tg), pH, anti-aging agent content, water content, molecular weight, molecular weight distribution, and complex viscosity of the obtained acrylic rubber sheet (A) were measured, and the results are shown in Table 2.

Next, using a Banbury mixer, 100 parts of the acrylic rubber (A) and the Compounding Agent A of "Composition 1" shown in Table 1 were added and mixed at 50°C for 5 minutes.

Then, the obtained mixture was transferred to a roll at 50°C, and the Compounding Agent B of "Composition 1" shown in Table 1 was compounded and mixed to obtain a rubber mixture (composition). Cross-link test of the rubber mixture using the acrylic rubber (A) before and after the storage stability test was conducted and the variation of the cross-link density (MH - ML) was measured and shown in Table 2.

[Table 1]

| Composition (Parts) | | Composition 1 | Composition 2 | Composition 3 | Composition 4 |
|---|---|---|---|---|---|
| Compounding Agent A | Polymer | 100 | 100 | 100 | 100 |
| | SEAST3(HAF) ※1 | 60 | 60 | 60 | 60 |
| | Stearic Acid | 1 | 1 | 1 | 1 |
| | Ester Wax | 1 | 1 | 1 | 1 |
| | NOCRAC CD ※2 | 2 | 2 | 2 | 2 |
| Compounding Agent B | Hexamethylenediamine carbamate | 0.5 | 0.6 | - | - |
| | Rhenogran®XLA-60 ※3 (Synthetic mixture of active amine and retarder) | 2 | 2 | - | - |
| | Ammonium benzoate | - | - | 1.5 | - |
| | NS soap (Semi-hardened beef tallow fatty acid soda soap) | - | - | - | 3 |
| | NONSOUL SN-1 (Main component of stearic acid) | - | - | - | 0.5 |
| | SULFAX® PMC (Sulfur content: 97.5%) | - | - | - | 0.3 |
| ※※1: SEAST3 (HAF) in the table is carbon black (made by Tokai Carbon Co., Ltd.).<br>※※2: The NOCRAC CD in the table is 4,4'-bis (a, $\alpha$-dimethylbenzyl) diphenylamine : made by OUCHI SHINKO CHEMICAL INDUSTRIAL CO.,LTD.).<br>※※3: Rhenogran® XLA-60 in the table is a vulcanization accelerator (made by LANXESS). | | | | | |

The obtained rubber mixture was put in a mold having a length of 15 cm, a width of 15 cm, and a depth of 0.2 cm, primary cross-linked by pressing for 10 minutes at 180°C while pressing at pressure of 10MPa, and then the obtained primary cross-link product was secondary cross-linked by further heating at 180°C for 2 hours by a gear oven, thereby the sheet-shaped rubber cross-link product was obtained. Then, a test piece of 3 cm × 2 cm × 0.2 cm was cut out from the obtained sheet-shaped rubber cross-link product and evaluated for the water resistance, and the normal physical properties of the obtained sheet-shaped rubber cross-link product were evaluated. The results are shown in Table 2.

[Example 2]

An acrylic rubber (B) was obtained in the same manner as in Example 1 except that the monomer component was changed to 4.5 parts of ethyl acrylate, 64.5 parts of n-butyl acrylate, 29.5 parts of methoxyethyl acrylate, and 1.5

parts of mono-n-butyl fumarate, the emulsion was changed to nonylphenyloxyhexaoxyethylene phosphate sodium salt, and each of the properties were evaluated. The results thereof are shown in Table 2.

[Example 3]

An acrylic rubber (C) was obtained in the same manner as in Example 1 except that the monomer component was changed to 48.25 parts of ethyl acrylate, 50 parts of n-butyl acrylate and 1.75 parts of mono-n-butyl fumarate, the emulsifier was changed to tridecyloxyhexaoxyethylene phosphate sodium salt, and each of the properties (the compound agent was changed to "Composition 2") were evaluated. The results thereof are shown in Table 2.

[Example 4]

An acrylic rubber (D) was obtained in the same manner as in Example 3 except that water content of the dehydration (drainage) in the screw-type extruder was changed to 30%. The results thereof are shown in Table 2.

[Example 5]

An acrylic rubber (E) weas obtained in the same manner as in Example 4 except that the monomer component were changed to 28 parts of ethyl acrylate, 38 parts of n-butyl acrylate, 27 parts of methoxyethyl acrylate, 5 parts of acrylonitrile and 2 parts of allyl glycidyl ether, and each of the properties (the compound agent was changed to "Composition 3") were evaluated. The results thereof are shown in Table 2.

[Example 6]

An acrylic rubber (F) was obtained in the same manner as in Example 4 except that the monomer component was changed to 42.5 parts of ethyl acrylate, 35 parts of n-butyl acrylate, 20 parts of methoxyethyl acrylate, 1.5 parts of acrylonitrile and 1.3 parts of vinyl chloroacetate, and each of the properties (the compounding agent was changed to "Composition 4") were evaluated. The results thereof are shown in Table 2.

[Comparative Example 1]

46 parts of pure water, 42.2 parts of ethyl acrylate, 35 parts of n-butyl acrylate, 20 parts of methoxyethyl acrylate, 1.5 parts of acrylonitrile, and 1.3 parts of vinyl chloroacetate were put in a mixing vessel equipped with a homomixer, with 0.709 parts of sodium lauryl sulfate and 1.82 parts of polyoxyethylene dodecyl ether (molecular weight 1500) as an emulsifier, and were stirred to obtain a monomer emulsion.

Next, 170 parts of pure water and 3 parts of the monomer emulsion obtained above were put into a polymerization reaction tank equipped with a thermometer and a stirrer, and cooled to 12°C under a nitrogen stream. Then, the rest of the monomer emulsion, 0.00033 part of ferrous sulfate, 0.264 part of sodium ascorbate, and 0.22 part of potassium persulfate were continuously added dropwise to the polymerization reaction tank over 3 hours. Thereafter, allowed the reaction to continue with the temperature inside the polymerization reaction tank kept at 23°C, confirmed that the polymerization conversion rate reached about 100%, and hydroquinone as a polymerization terminator was added to terminate the polymerization reaction, and 1 part of 3-(3,5-di-tert-butyl-4-hydroxyphenyl) stearyl propionate (Irganox1076; manufactured by BASF SE) was added as 50% by weight water dispersion liquid (0.1% by weight of sodium lauryl sulfate dispersion liquid) to obtain the emulsion polymerization liquid.

Subsequently, after heating the emulsion polymerization liquid added with the anti-aging agent to 80°C, 0.7% sodium sulfate aqueous solution (coagulant liquid) was continuously added to the emulsion polymerization liquid (rotation speed 100 rpm, peripheral speed 0.5 m/s) so that the polymerized liquid was coagulated, and then filtrated the coagulated polymerized liquid to obtain hydrous crumbs. 194 parts of industrial water was added to 100 parts of the hydrous crumbs thus obtained, and after stirred at 25°C for 5 minutes, then the hydrous crumbs that drain water from the coagulation tank were washed 4 times, and then 194 parts of a sulfuric acid aqueous solution of pH3 was added and stirred at 25°C for 5 minutes, thereafter water was drained from the coagulation tank, and acid washing was performed once, then 194 parts of pure water was added and pure water washing was performed once, and then dried by a hot air drier of 160°C, to obtain the acrylic rubber (G) having a water content of 0.4% by weight. Properties of the obtained acrylic rubber (G) were evaluated and shown in Table 2.

[Comparative Example 2]

An acrylic rubber (H) was obtained in the same manner as in Comparative Example 1 except that the anti-aging agent added to the emulsion polymerization solution was changed to 4,4'-bis(α,α-dimethylbenzyl)diphenylamine (NOCRAC CD; manufactured by OUCHI SHINKO CHEMICAL INDUSTRY CO., LTD.). Properties of the obtained acrylic rubber (H) were evaluated and shown in Table 2.

[Table 2]

| | Example 1 | Example 2 | Example 3 | Example 4 | Example 5 | Example 6 | Comparative Example 1 | Comparative Example 2 |
|---|---|---|---|---|---|---|---|---|
| Type of Acrylic Rubber | (A) | (B) | (C) | (D) | (E) | (F) | (G) | (H) |
| Reactive group type | Carboxyl Group | Carboxyl Group | Carboxyl Group | Carboxyl Group | Epoxy Group | Chlorine | Chlorine | Chlorine |
| Reactive group content (%) | 0.31 | 0.31 | 0.35 | 0.34 | 0.37 | 0.27 | 0.27 | 0.27 |
| Monomeric unit Composition of Acrylic Rubber (%) | | | | | | | | |
| Ethyl acrylate | 74.5 | 4.5 | 48.25 | 48.25 | 28 | 42.5 | 42.2 | 42.2 |
| n-butyl acrylate | 17 | 64.5 | 50 | 50 | 38 | 35 | 35 | 35 |
| Methoxyethyl acrylate | 7 | 29.5 | - | - | 27 | 20 | 20 | 20 |
| Acrylonitrile | | - | - | - | 5 | 1.5 | 1.5 | 1.5 |
| Mono-n-butyl fumarate | 1.5 | 1.5 | 1.75 | 1.75 | - | - | - | - |
| Allyl glycidyl ether | | - | - | - | 2 | - | - | - |
| Chlorovinyl acetate | | - | - | - | - | 1.3 | 1.3 | 1.3 |
| Emulsifier (Parts) | | | | | | | | |
| Octyloxydioxyetylene phosphate ester sodium salt | 1.8 | - | - | - | - | - | - | - |
| Nonylphenyloxyhexaoxyethylene phosphate ester sodium salt | - | 1.8 | - | - | - | - | - | - |
| Tridecyloxyhexaoxyethylene phosphate ester sodium salt | - | - | 1.8 | 1.8 | 1.8 | 1.8 | - | - |
| Lauryl sulfate sodium salt | - | - | - | - | - | - | 0.709 | 0.709 |
| Polyoxyethylene dodecyl ether | - | - | - | - | - | - | 1.82 | 1.82 |
| Anti-aging Agent Addition Process | | | | | | | | |
| Anti-aging Agent Type ※1 | IRG1135 | IRG1135 | IRG1135 | IRG1135 | IRG1135 | IRG1135 | IRG1076 | Nocrac CD |
| State | Liquid | Liquid | Liquid | Liquid | Liquid | Liquid | Solid | Solid |
| Molecular weight | 390 | 390 | 390 | 390 | 390 | 390 | 561 | 406 |
| Melting point (°C) | 10 | 10 | 10 | 10 | 10 | 10 | 52 | 95 |
| Addition amount (part) | 1 | 1 | 1 | 1 | 1 | 1 | 1 | 1 |
| Coagulation Process | | | | | | | | |
| Coagulant | $MgSO_4$ | $MgSO_4$ | $MgSO_4$ | $MgSO_4$ | $MgSO_4$ | $MgSO_4$ | $Na_2SO_4$ | $Na_2SO_4$ |
| Coagulant concentration (%) | 2 | 2 | 2 | 2 | 2 | 2 | 0.7 | 0.7 |
| Method of addition ※2 | Lx ↓ | Lx ↓ | Lx ↓ | Lx ↓ | Lx ↓ | Lx ↓ | Coa ↓ | Coa ↓ |
| Stirring speed (rpm) | 600 | 600 | 600 | 600 | 600 | 600 | 100 | 100 |
| Peripheral speed (m/s) | 3.1 | 3.1 | 3.1 | 3.1 | 3.1 | 3.1 | 0.5 | 0.5 |
| Washing Process | | | | | | | | |
| Water temperature (°C) | 70 | 70 | 70 | 70 | 70 | 70 | 25 | 25 |
| Number of washings | 2 | 2 | 2 | 2 | 2 | 2 | 4+1+1 | 4+1+1 |
| Dehydration Process | Yes | Yes | Yes | Yes | Yes | Yes | No | No |
| Water content (%) after dehydration (drainage) | 20 | 20 | 20 | 30 | 30 | 30 | - | - |
| Ash Properties of Acrylic Rubber | | | | | | | | |
| Ash Content (%) | 0.110 | 0.110 | 0.090 | 0.170 | 0.172 | 0.168 | 0.285 | 0.285 |
| Ash Content | | | | | | | | |
| P (ppm) | 511 | 644 | 520 | 890 | 862 | 865 | 15 | 15 |
| Mg (ppm) | 348 | 360 | 273 | 561 | 599 | 601 | 10 | 10 |
| Na (ppm) | 66 | 44 | 28 | 99 | 76 | 66 | 1390 | 1390 |
| Ca (ppm) | 5 | 4 | 7 | 9 | 5 | 6 | 20 | 20 |
| S (ppm) | 4 | 3 | 21 | 56 | 59 | 63 | 1200 | 1200 |
| Mg+P (% in ash) | 78 | 91 | 88 | 85 | 85 | 87 | 1 | 1 |
| Mg/P (ratio) | 0.68 | 0.56 | 0.53 | 0.63 | 0.69 | 0.69 | 0.67 | 0.67 |
| Property Values of Acrylic Rubber | | | | | | | | |
| Tg (°C) | -20 | -39 | -28 | -28 | -25 | -28 | -29 | -29 |
| pH | 4.7 | 5 | 4.5 | 4.8 | 5 | 4.8 | 3.1 | 3.1 |
| Anti-aging agent content (%) | 0.95 | 0.96 | 0.96 | 0.96 | 0.95 | 0.96 | 0.94 | 0.94 |
| Water content (%) | 0.4 | 0.4 | 0.4 | 0.3 | 0.3 | 0.4 | 0.4 | 0.4 |
| Mw/1000 | 1610 | 1380 | 1450 | 1450 | 1410 | 1520 | 1480 | 1480 |
| Mz/Mw | 1.8 | 1.69 | 1.79 | 1.79 | 1.68 | 1.75 | 1.74 | 1.74 |
| $\eta$ (100°C) (Pa·s) | 3053 | 3124 | 3150 | 3150 | 2989 | 3081 | 2990 | 3005 |
| $\eta$ (60°C) (Pa·s) | 3689 | 3360 | 3620 | 3620 | 3672 | 3520 | 3380 | 3450 |
| Viscosity ratio $\eta$ (100°C) / $\eta$ (60°C) | 0.83 | 0.93 | 0.87 | 0.87 | 0.84 | 0.88 | 0.86 | 0.87 |
| Property Evaluation of Acrylic Rubber | | | | | | | | |
| Storage stability (45°C × 80%RH × 7days) Cross-linking density change rate (index) | 32 | 32 | 33 | 34 | 31 | 33 | 100 | 142 |
| Water Resistance Test (85°C × 100hr) Volume change rate (index) | 3 | 3 | 2 | 7 | 5 | 10 | 100 | 102 |
| Normal Physical Property Evaluation | | | | | | | | |
| Breaking strength | ◎ | ◎ | ◎ | ◎ | ◎ | ◎ | ◎ | ◎ |
| 100% tensile stress | ◎ | ◎ | ◎ | ◎ | ◎ | ◎ | ◎ | ◎ |
| Breaking elongation | ◎ | ◎ | ◎ | ◎ | ◎ | ◎ | ◎ | ◎ |

※1: In the table, IRG1135 represents 3-(4-hydroxy-3,5-di-tert-butylphenyl) octyl propionate (made by BASF), IRG1076 represents 3-(3,5-di-tert-butyl-4-hydroxyphenyl) stearyl propionate (made by BASF), and NOCRAC CD represents 4,4'-bis ($\alpha$, $\alpha$-dimethylbenzyl) diphenylene amine (made by OUCHI SHINKO CHEMICAL INDUSTRIAL CO., LTD.).

※2: In the table, Lx ↓ indicates that the emulsion polymerization liquid was added to the coagulant liquid, and Coa ↓ indicates that the coagulant liquid was added to the emulsion polymerization liquid.

From Table 2, it can be understood that the acrylic rubbers (A) to (F) of the present invention, comprising: 50 to 99.9% by weight of a bond unit derived from at least one (meth) acrylic acid ester selected from the group consisting of (meth) acrylic acid alkyl ester and (meth) acrylic acid alkoxyalkyl ester; 0.1 to 20% by weight of the bond unit derived

from a monomer containing a reactive group; and 0 to 30% by weight of a bond unit derived from other monomer, wherein the acrylic rubber contains a phenolic anti-aging agent represented by a general formula (1), and the weight average molecular weight (Mw) of the acrylic rubber is in the range of 100,000 to 5,000,000, are excellent in storage stability, and are excellent in normal physical properties including strength characteristics and water resistance (comparison of Examples 1 to 6 and Comparative Examples 1 and 2).

Regarding the normal state physical properties, the acrylic rubbers (A) to (G) produced under the conditions of the examples of the present application and the comparative examples had a weight average molecular weight (Mw) of more than 100,000 as measured by GPC-MALS. In addition, the ratio (Mz/Mw) of the Z-average molecular weight (Mz) and the weight-average molecular weight (Mw) of the absolute molecular weight distribution, which emphasizes the high molecular weight region measured by GPC-MALS, is a fairly large value exceeding 1.3. Therefore, it can be seen that the normal physical properties including the breaking strength are all excellent (Examples 1 to 6 and Comparative Examples 1 and 2). However, it can be seen from Table 2 that the acrylic rubbers (G) to (H) of Comparative Examples 1 and 2 are extremely poor in storage stability and water resistance even though they have excellent strength characteristics.

Regarding the storage stability, since the anti-aging agent content of the acrylic rubbers (A) to (F) is the same as that of the acrylic rubber (G), it can be understood that the acrylic rubber storage stabilization effect of the phenolic anti-aging agent represented by the general formula (1) is significantly superior to that of the phenolic antiaging agent used for acrylic rubber (G). This is considered that the difference in uniform fine dispersibility within the acrylic rubbers (A) to (F) resulted in the difference in storage stability, since there is not much difference in the antioxidant effect of both phenolic anti-aging agents on peroxide radicals (comparison between Examples 1 to 6 and Comparative Example 1). In addition, after the storage stability test, no change in color tone was observed in the acrylic rubbers (A) to (F), but the acrylic rubbers (G) to (H) were yellowed.

Regarding the water resistance, it can be understood from Table 2 that the acrylic rubbers (A) to (F) of the present invention are overwhelmingly superior to the acrylic rubbers (G) to (H) (Comparison of Examples 1 to 6 and Comparative Examples 1 to 2). This is because the water resistance of the acrylic rubbers (A) to (F) is remarkably improved, and the normal physical properties including the strength characteristics and the storage stability are highly well-balanced (Examples 1 to 6), since the ash content in the acrylic rubber was reduced by squeezing water from the water content crumbs to a specific water content in the dehydration process, and when a phosphate ester salt is used as an emulsifier and a magnesium salt is used as a coagulant, the ash remaining in the acrylic rubber is high in magnesium and phosphorus, and it has almost no effect on water resistance when both are in a specific ratio.

From Table 2, it can be further understood that the acrylic rubbers (A) to (F) containing a phenolic anti-aging agent represented by the general formula (1), and having specific values of the reactive group amount, glass transition temperature (Tg), pH, water content, weight average molecular weight (Mw), the ratio (Mz/Mw) of the Z-average molecular weight (Mz) to the weight-average molecular weight (Mw), the complex viscosity $\eta$ (100°C) at 100°C, the complex viscosity $\eta$ (60°C) at 60°C, the ratio ($\eta$ 100°C / $\eta$ 60°C) of the complex viscosity at 100°C and 60°C, are excellent in storage stability and are also excellent in normal physical properties including strength properties and water resistance (Examples 1 to 6).

[Example 7]

An acrylic rubber (I) was obtained in the same manner as in Comparative Example 1 except that the anti-aging agent added to the emulsion polymerization solution was changed to 3-(4-hydroxy-3,5-di-tert-butylphenyl) octyl propionate (Irganox 1135; manufactured by BASF SE). When the storage stability, water resistance and normal state properties of the obtained acrylic rubber (I) were evaluated, the storage stability was "45", the water resistance was "100", the breaking strength was "◎", the 100% tensile stress was "◎", and the elongation at break was "◎". From these results, it can be understood that the effect of the storage stability of the acrylic rubber of the phenolic anti-aging agent represented by the above general formula (1) used in Example 7 is higher than that of the antiaging agent used in Comparative Examples 1 and 2., and that the storage stability was further improved by specifying the ash content of the specific ash component (comparison between Example 7 and Comparative Examples 1 and 2 and Examples 1 to 6).

[Examples 8 to 10]

Emulsion polymerization, coagulation and washing were carried out in the same manner as in Examples 1 to 3 to supply a hydrous crumb (hydrous crumb temperature of 65°C) to a screw-type extruder, dehydrated and dried to extrude a sheet-shaped dry rubber having a width of 300 mm and a thickness of 10 mm. Then, the sheet-shaped dry rubber was cooled at a cooling rate of 200°C/hr by using a conveyance type cooling device directly connected to the screw-type extruder.

The screw-type extruders used in Examples 8 to 10 has one supply barrel, three dehydration barrels (first to

third dehydration barrels), and five drying barrels (first to fifth drying barrels). The first and second dehydration barrels drain water, and the third dehydration barrel drains steam. The operating conditions of the screw-type extruder were as follows.

Water Content:

- Water content of hydrous crumb after draining in the second dehydration barrel: 20%
- Water content of hydrous crumb after exhaust steam in the third dehydration barrel: 10%
- Moisture content of the hydrous crumb after drying in the 5th drying barrel: 0.4% Rubber temperature:
    - Temperature of hydrous crumbs supplied to the first supply barrel: 65°C
    - Temperature of rubber discharged from screw-type extruder: 140°C

Set temperature of each barrel section:

- First dehydration barrel: 90°C
- Second dehydration barrel: 100°C
- Third dehydration barrel: 120°C
- First drying barrel: 120°C
- Second drying barrel: 130°C
- Third drying barrel: 140°C
- Fourth drying barrel: 160°C
- Fifth drying barrel: 180°C

Operating conditions:

- Screw diameter (D) in the barrel section: 132 mm
- Overall length (L) of the screw in the barrel section: 4620 mm
- L / D: 35
- Rotation speed of the screw in the barrel section: 135 rpm
- Rubber extrusion rate from die: 700 kg/hr
- Die resin pressure: 2 MPa

The extruded sheet-shaped dry rubber (sheet-shaped acrylic rubber (J) to (L)) was cooled to 50°C and then cut with a cutter, and laminated the sheet-shaped acrylic rubber to be 20 parts (20 kg) before the temperature fell below 40°C or lower, thereby bale-shaped acrylic rubber (J) to (L) was obtained.

The specific gravity and the amount of gel insoluble in methyl ethyl ketone of the obtained sheet-shaped acrylic rubbers (J) to (L) and bale-shaped acrylic rubbers (J) to (L) were measured to find out that the measured values of the sheet-shaped acrylic rubber and the bale-shaped acrylic rubber were almost the same: the sheet-shaped and bale-shaped acrylic rubber (J) had a specific gravity of 1.107 and a gel amount of 1.7% by weight; the sheet-shaped and bale-shaped acrylic rubber (K) had a specific gravity of 1.098 and a gel amount of 2.3% by weight; and the sheet-shaped and bale-shaped acrylic rubber (L) had a specific gravity of 1.101 and a gel amount of 1.9% by weight. The sheet-shaped and bale-shaped acrylic rubbers (J) to (L) all had low air entrapment, high specific gravity, and very small amount of gel insoluble in methyl ethyl ketone.

Reactive group content, ash content, ash component content, glass transition temperature (Tg), pH, anti-aging agent content, water content, molecular weight, and molecular weight distribution, and complex viscosity of the obtained sheet-shaped and bale-shaped acrylic rubbers (J) to (L) were measured, to find out that the values were almost the same as those of the corresponding acrylic rubbers (A) to (C).

Storage stability, water resistance, and normal physical properties of the obtained sheet-shaped and bale-shaped acrylic rubbers (J) to (L) were evaluated in the same manner as in Examples 1 to 3, to find out that the normal physical properties and the water resistance were as excellent as those of the corresponding acrylic rubbers (A) to (C), and the storage stability was "less than 30" in all cases, so that the results were superior to the corresponding acrylic rubbers (A) to (C).

[EXPLANATION OF REFERENCE NUMERALS]

1 Acrylic Rubber Production System
3 Coagulation Device
4 Washing Device
5 Screw-Type Extruder
6 Cooling Device
7 Baling Device

## Claims

1. An acrylic rubber, comprising:

50 to 99.9% by weight of a bond unit derived from at least one (meth) acrylic acid ester selected from the group consisting of (meth) acrylic acid alkyl ester and (meth) acrylic acid alkoxyalkyl ester;
0.1 to 20% by weight of a bond unit derived from a monomer containing a reactive group; and
0 to 30% by weight of a bond unit derived from other monomer, wherein
the acrylic rubber contains a phenolic anti-aging agent represented by a general formula (1),

[Chemical 5]

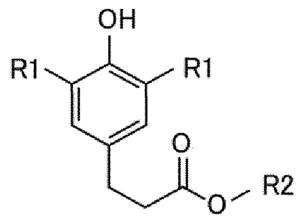

(R1 represents an isopropyl group or a t-butyl group, and R2 represents an alkyl group having 1 to 12 carbon atoms.), and the weight average molecular weight (Mw) of the acrylic rubber is in the range of 100,000 to 5,000,000.

2. The acrylic rubber according to claim 1, wherein the phenolic anti-aging agent represented by the general formula (1) is 3-(4-hydroxy-3,5-di-tert-butylphenyl) octyl propionate or 3-(4-hydroxy-3,5-diisopropylphenyl) octyl propionate.

3. The acrylic rubber according to claim 1 or 2, wherein the content of the phenolic anti-aging agent represented by the general formula (1) is 0.001 to 15% by weight.

4. The acrylic rubber according to any one of claims 1 to 3, wherein a ratio (Mz / Mw) of Z-average molecular weight (Mz) and weight average molecular weight(Mw) is 1.3 or more.

5. The acrylic rubber according to any one of claims 1 to 4, wherein the complex viscosity ([η] 60°C) at 60°C is 15,000 Pa·s or less.

6. The acrylic rubber according to any one of claims 1 to 5, wherein a ratio ([η] 100°C / [η] 60°C) of the complex viscosity ([η] 100°C) at 100°C to the complex viscosity ([η] 60°C) at 60°C is 0.5 or more.

7. The acrylic rubber according to any one of claims 1 to 6, wherein a pH is 6 or less.

8. The acrylic rubber according to any one of claims 1 to 7, wherein a water content is less than 1% by weight.

9. The acrylic rubber according to any one of claims 1 to 8, wherein an ash content is 0.5% by weight or less.

10. The acrylic rubber according to any one of claims 1 to 9, wherein a total amount of magnesium and phosphorus in the ash is 30% by weight or more.

11. The acrylic rubber according to any one of claims 1 to 10, wherein a ratio ([Mg]/[P]) of magnesium to phosphorus in the ash is preferably in the range of 0.4 to 2.5.

**12.** The acrylic rubber according to any one of claims 1 to 11, wherein the acrylic rubber has a sheet shape or a bale shape.

**13.** The acrylic rubber according to any one of claims 1 to 12, wherein a specific gravity is 0.8 or more.

**14.** The acrylic rubber according to any one of claims 1 to 13, wherein a gel amount is 50% by weight or less.

**15.** A method for producing an acrylic rubber by:

emulsifying a monomer component containing at least one (meth) acrylic acid ester selected from the group consisting of (meth) acrylic acid alkyl ester and (meth) acrylic acid alkoxyalkyl ester, a monomer containing a reactive group, and other copolymerizable monomers as required, with water and an emulsifier, to obtain an emulsion polymerization liquid emulsion-polymerized under the presence of a polymerization catalyst; and adding a phenolic anti-aging agent represented by a general formula (1),

[Chemical 6]

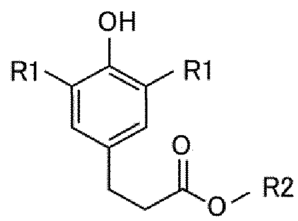

(R1 represents an isopropyl group or a t-butyl group, and R2 represents an alkyl group having 1 to 12 carbon atoms.) to the obtained emulsion polymerization liquid; and thereafter coagulating and drying.

**16.** The method for producing an acrylic rubber according to claim 15, wherein the coagulation of the emulsion polymerization liquid added with the phenolic anti-aging agent represented by the general formula (1) is performed by adding the emulsion polymerization liquid to the coagulant liquid being stirred.

**17.** The method for producing an acrylic rubber according to claim 15 or 16, wherein the hydrous crumb produced during coagulation is washed with hot water.

**18.** The method for producing an acrylic rubber according to claim 17, wherein water is squeezed out from the hydrous crumb after washing using a dehydrator.

**19.** A rubber composition including a rubber component containing the acrylic rubber according to any one of claims 1 to 14, a filler, and a cross-linking agent.

**20.** A rubber cross-linked product obtained by cross-linking the rubber composition according to claim 19.

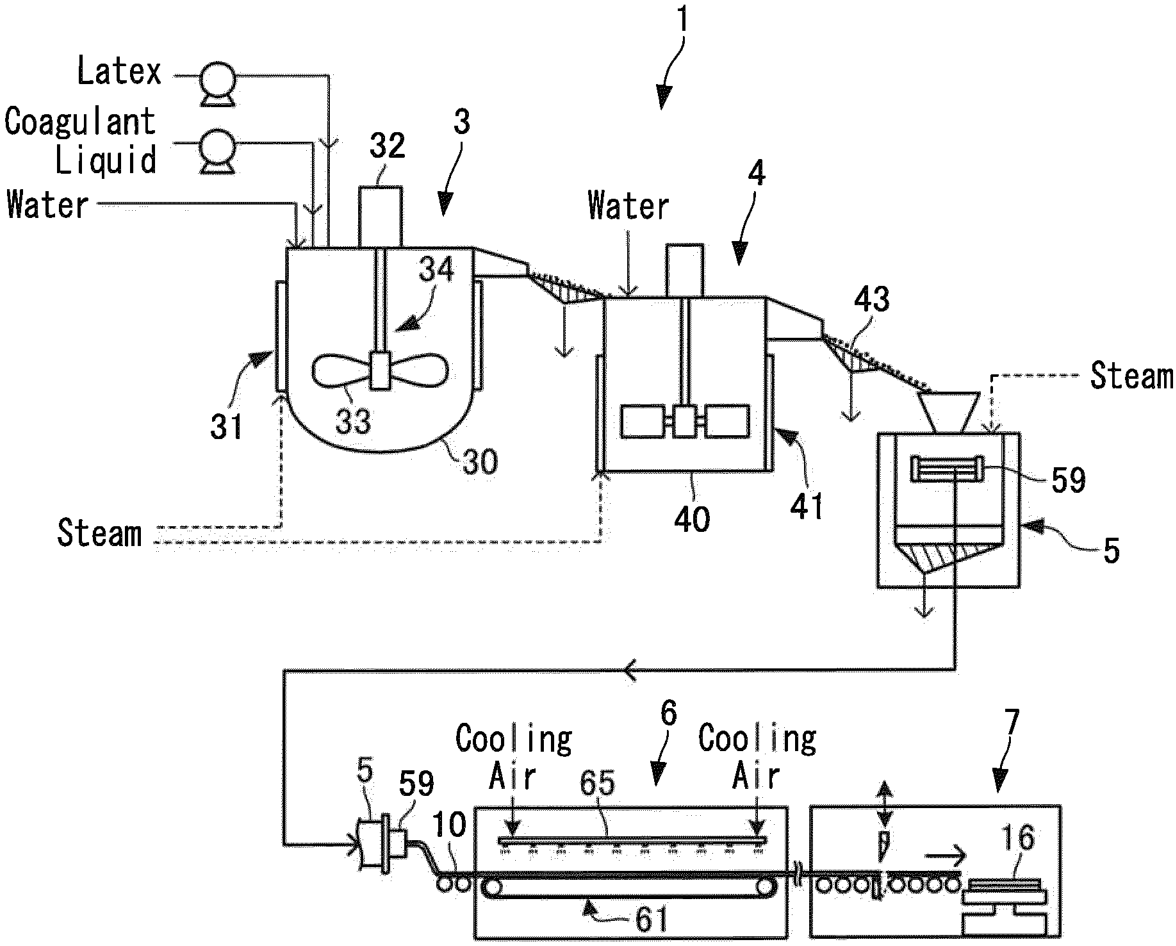
1
Latex
Coagulant Liquid
Water
32
3
34
33
31
30
Steam
Water
4
43
40
41
Steam
59
5
6
Cooling Air
Cooling Air
65
5
59
10
61
7
16

FIG.1

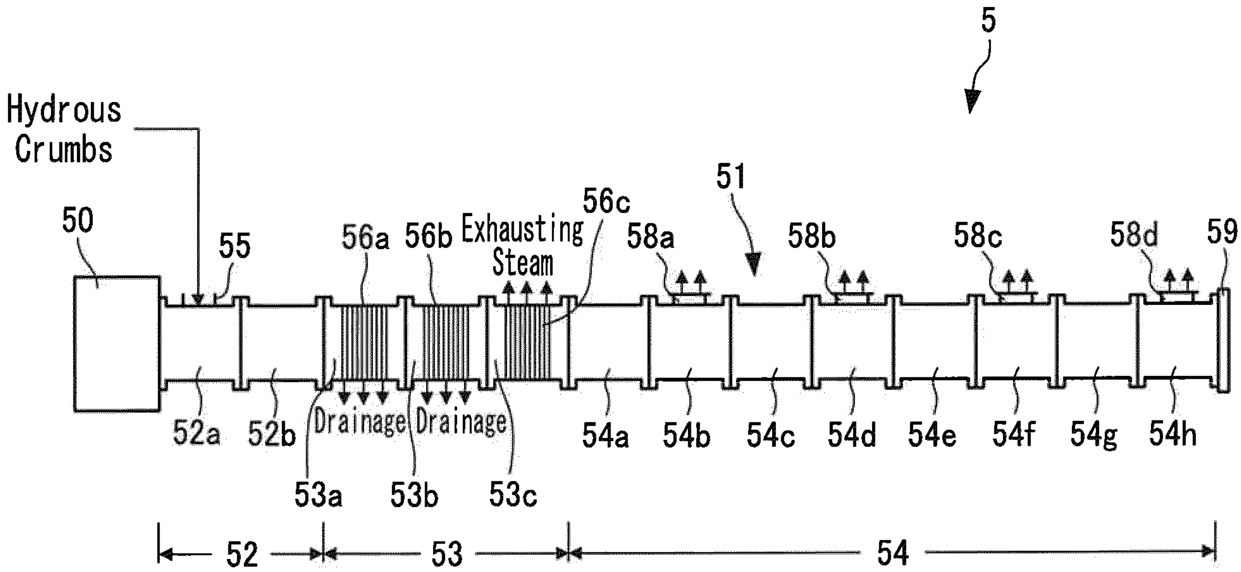
5
Hydrous Crumbs
50
55
56a
56b
Exhausting Steam
56c
51
58a
58b
58c
58d
59
52a
52b
Drainage
Drainage
53a
53b
53c
54a
54b
54c
54d
54e
54f
54g
54h
52
53
54

FIG.2

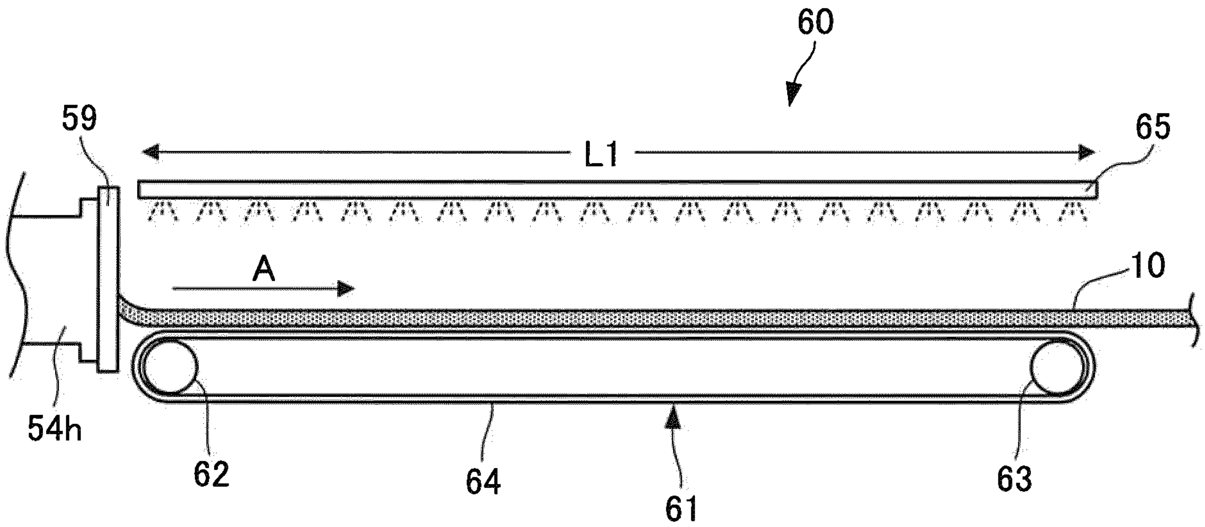


FIG.3

**INTERNATIONAL SEARCH REPORT**

International application No. PCT/JP2020/022317

A. CLASSIFICATION OF SUBJECT MATTER
Int.Cl. C08F220/12(2006.01)i, C08F220/26(2006.01)i, C08K5/13(2006.01)i, C08L33/04(2006.01)i, C08L33/14(2006.01)i
FI: C08F220/12, C08F220/26, C08L33/04, C08L33/14, C08K5/13
According to International Patent Classification (IPC) or to both national classification and IPC

B. FIELDS SEARCHED
Minimum documentation searched (classification system followed by classification symbols)
Int.Cl. C08F220/12, C08F220/26, C08K5/13, C08L33/04, C08L33/14

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | JP 2005-60440 A (TOAGOSEI CO., LTD.) 10.03.2005 (2005-03-10), claims 1-6, examples 1-5, paragraphs [0025]-[0028], table 1, reference example 1, paragraphs[0030]-[0031] | 1-3, 8, 9, 11, 13, 14, 19, 20 |
| X | WO 2009/154205 A1 (TOAGOSEI CO., LTD.) 23.12.2009 (2009-12-23), claim 1, comparative synthesis example 2, paragraph [0080], table 1, comparative example 2, paragraph [0084], table 2 | 1-3, 8, 11, 13, 14, 19, 20 |
| A | Technical Information Tinuvin B75, BASF, 2010.08 particularly, Chemical name, Chemical formula | 1-20 |
| A | WO 2018/139466 A1 (ZEON CORPORATION) 02.08.2018 (2018-08-02), claims, examples | 1-20 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27.07.2020 | 18.08.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/022317

| | | |
|---|---|---|
| JP 2005-60440 A | 10.03.2005 | (Family: none) |
| WO 2009/154205 A1 | 23.12.2009 | (Family: none) |
| WO 2018/139466 A1 | 02.08.2018 | EP 3575345 A1<br>claims, examples<br>CN 110198971 A<br>KR 10-2019-0104171 A<br>TW 201833145 A |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018139466 A